# EUROPEAN PATENT APPLICATION

(11) **EP 4 773 331 A2**
(43) Date of publication of application: **08.07.2026**
(21) Application number: 25201493.1
(22) Date of filing: 10.09.2025
(51) Int. Cl.: H01M 10/42, H01M 10/48, H01M 10/6551, H01M 50/204, H01M 50/258, H01M 50/618, H01M 50/682, H02M 1/32, H02M 7/00, H02J 7/60, H02J 7/70

(54) **INTEGRATED ENERGY STORAGE UNIT, ENERGY STORAGE-POWER EXPANSION PACK, AND ENERGY STORAGE DEVICE**

(30) Priority: 16.07.2025 CN 202510987703; 16.07.2025 CN 202521495123 U
(71) Applicant: Shenzhen Hello Tech Energy Co., Ltd, Shenzhen, Guangdong 518109 (CN)
(72) Inventor: LAI, Weixin, Shenzhen, 518109 (CN); SUN, Zhongwei, Shenzhen, 518109 (CN); YANG, Yuanchi, Shenzhen, 518109 (CN); FU, Rao, Shenzhen, 518109 (CN)
(74) Representative: Dehns Germany Partnerschaft mbB

(57) **Abstract**

Provided are an integrated energy storage unit, an energy storage-power expansion pack, and an energy storage device. The integrated energy storage unit includes an integrated unit case and a first firefighting module. The integrated unit case includes a first battery box housing and a heat sink housing that are detachably connected to each other. A first battery module is fixed in the first battery box housing. An inverter circuit board is fixed in the heat sink housing. The inverter circuit board is configured for a conversion between an alternating current and a direct current and heat dissipation to an exterior environment through the heat sink housing. The first firefighting module is disposed in the integrated unit case. The first firefighting module includes a trigger mechanism, a fire-extinguishing agent storage compartment, and a release mechanism. The trigger mechanism is disposed in a firefighting detection region in the integrated unit case and configured to generate a trigger signal when a firefighting trigger condition in the firefighting detection region is met. The fire-extinguishing agent storage compartment is configured to store a fire extinguishing agent. The release mechanism is configured to, in response to the trigger signal from the trigger mechanism, release the fire extinguishing agent into a chamber where the first battery module is located.

## Description

### CROSS-REFERENCE TO RELATED APPLICATION

This application claims priorities to and benefits of Chinese patent applications Nos. 202521495123.7 and 202510987703.6, filed with China National Intellectual Property Administration on July 16, 2025. The disclosures of the aforementioned applications are incorporated herein by reference in their entireties.

### FIELD

The present disclosure relates to the field of energy storage technologies, and more particularly, to an integrated energy storage unit, an energy storage-power expansion pack, and an energy storage device.

### BACKGROUND

With the development of the new energy industry and continuous innovation of battery technologies, consumer-oriented energy storage systems have rapidly gained popularity due to their eco-friendly and cost-effective characteristics. Such systems are primarily classified into outdoor portable energy storage systems and indoor energy storage systems according to application scenarios. The indoor energy storage systems are further sub-classified into household energy storage systems and balcony photovoltaic energy storage systems.

The outdoor portable energy storage system is specially designed for mobile scenarios, such as camping and self-driving, providing a lightweight and plug-and-play power supply with small and medium power. The household energy storage systems are targeted at users with independent residences (typically equipped with rooftop photovoltaics), deeply integrated with photovoltaic systems, storing surplus power for household energy management (improving self-consumption rate) and providing a long-term emergency backup power supply. The balcony photovoltaic energy storage systems are targeted at urban apartment users (with limited space/budget) and realize "self-generation for self-consumption and surplus power fed into grid" by mounting micro photovoltaic modules on the balcony and combining small-scale energy storage system, which is primarily used to reduce daily electricity bills.

Lithium batteries, as core components of these systems, are crucial in terms of safety. Unlike industrial and commercial energy storage systems, the consumer-oriented energy storage systems are directly related to personal and property safety of the users. However, the inventors have realized that the lithium batteries may undergo thermal runaway (where an uncontrollable temperature rise triggers a chain exothermic reaction) under internal or external incentives, which may further lead to a risk of ignition and combustion. Accordingly, how to further improve the safety of the consumer-oriented energy storage systems is a key technical problem that needs to be overcome urgently at present.

### SUMMARY

The present disclosure provides an integrated energy storage unit, an energy storage-power expansion pack, and an energy storage device, which can solve at least one of the technical problems mentioned above.

An integrated energy storage unit according to embodiments of the present disclosure includes an integrated unit case, a first battery module, an inverter circuit board, and a first firefighting module. The integrated unit case includes a first battery box housing and a heat sink housing that are detachably connected to each other. A first battery module is fixed in the first battery box housing. An inverter circuit board is fixed in the heat sink housing. The first battery module includes a plurality of battery cells configured to store and output electrical energy. The inverter circuit board is configured for a conversion between an alternating current and a direct current and heat dissipation to an exterior environment through the heat sink housing. The first firefighting module is disposed in the integrated unit case. The first firefighting module includes a trigger mechanism, a fire-extinguishing agent storage compartment, and a release mechanism. The trigger mechanism is disposed in a firefighting detection region in the integrated unit case and configured to generate a trigger signal when a firefighting trigger condition in the firefighting detection region is met. The fire-extinguishing agent storage compartment is configured to store a fire extinguishing agent. The release mechanism is configured to, in response to the trigger signal from the trigger mechanism, release the fire extinguishing agent into a chamber where the first battery module is located.

The above-mentioned integrated energy storage unit, taking into account characteristics of consumer-oriented energy storage products, has elaborately designed a firefighting solution for the consumer-oriented energy storage products. It adopts a built-in firefighting design that is compact and economical, maintenance-free, efficient and reliable, without affecting appearance of the energy storage device.

An energy storage-power expansion pack according to embodiments of the present disclosure is configured to be electrically connected to an integrated energy storage unit to expand capacity of the integrated energy storage unit. The energy storage-power expansion pack includes a power-expansion pack case, a second battery module and a second firefighting module. The power-expansion pack case includes a second battery box housing and a cover plate that are detachably connected to each other. A second battery module is fixed in the second battery box housing. The cover plate is configured to close a mounting opening of the second battery box housing. The second battery module includes a plurality of battery cells configured to store and output electrical energy. The second firefighting module is disposed in the power-expansion pack case. The second firefighting module includes a trigger mechanism, a fire-extinguishing agent storage compartment, and a release mechanism. The trigger mechanism is disposed in a firefighting detection region in the power-expansion pack case and configured to generate a trigger signal when a firefighting trigger condition in the firefighting detection region is met. The fire-extinguishing agent storage compartment is configured to store a fire extinguishing agent. The release mechanism is configured to, in response to the trigger signal from the trigger mechanism, release the fire extinguishing agent into a chamber where the second battery module is located.

An energy storage device according to embodiments of the present disclosure includes the integrated energy storage unit described above and at least one energy storage-power expansion pack described above. Each of the at least one energy storage-power expansion pack is configured to be electrically connected to the integrated energy storage unit to enable capacity expansion of the integrated energy storage unit.

Additional aspects and advantages of the embodiments of the present disclosure will be provided at least in part in the following description, or will become apparent in part from the following description, or can be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings.
FIG. 1 is a schematic structural view of an integrated energy storage unit according to an embodiment of the present disclosure.
FIG. 2 is another schematic structural view of an integrated energy storage unit according to an embodiment of the present disclosure.
FIG. 3 is a schematic exploded view of an integrated energy storage unit according to an embodiment of the present disclosure.
FIG. 4 is another schematic exploded view of an integrated energy storage unit according to an embodiment of the present disclosure.
FIG. 5 is a schematic structural view of a first firefighting module and a second firefighting module according to an embodiment of the present disclosure.
FIG. 6 is another schematic structural view of a first firefighting module and a second firefighting module according to an embodiment of the present disclosure.
FIG. 7 is a schematic structural view of a battery cell according to an embodiment of the present disclosure.
FIG. 8 is a schematic structural view of an energy storage-power expansion pack according to an embodiment of the present disclosure.
FIG. 9 is another schematic structural view of an energy storage-power expansion pack according to an embodiment of the present disclosure.
FIG. 10 is a schematic exploded view of an energy storage-power expansion pack according to an embodiment of the present disclosure.
FIG. 11 is another schematic exploded view of an energy storage-power expansion pack according to an embodiment of the present disclosure.
FIG. 12 is a schematic structural view of an energy storage device according to an embodiment of the present disclosure.
FIG. 13 is a top view of an energy storage device according to an embodiment of the present disclosure.

Reference numerals of the components shown in the figures:
integrated energy storage unit 100, integrated unit case 102, first battery module 104, inverter circuit board 106, first firefighting module 108, first module body 108a, first battery box housing 110, heat sink housing 112, battery cell 114, trigger mechanism 116, release mechanism 118, firefighting detection region 120, first mounting opening 122, second mounting opening 124, first battery management control board 126, heat dissipation fin 1 28, thermal sensitive wire 130, fiberglass tube 132, battery cell body 134, positive electrode 136, negative electrode 138, explosion-proof valve 140, support plate 142, wire harness 144, connection portion 145, nozzle 146, partition 148, first chamber 150, second chamber 152, breather valve 154, photovoltaic connection terminal 156, grid connection terminal 158, alternating-current load output terminal 160, first battery support 162, protective cover 224;
energy storage-power expansion pack 200, power-expansion pack case 202, second battery module 204, second firefighting module 206, second module body 206a, second battery box housing 208, cover plate 210, mounting opening 212, second battery management control board 214, blind-mate terminal 216, second battery support 218, foam 220, module support 222;
energy storage device 300.

### DETAILED DESCRIPTION

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the accompany drawings are illustrative only, and are intended to explain rather than limit the present disclosure.

In the embodiments of the present disclosure, it should be noted that unless otherwise clearly specified and limited, terms "installed", "connected", "connected to" should be understood broadly, such as a fixed connection or a detachable connection or connection as one piece; mechanical connection or electrical connection; direct connection or indirect connection through an intermediate; internal communication of two components or interaction relations between two components. For those of ordinary skill in the art, the specific meaning of the above-mentioned terms in the present disclosure can be understood according to specific circumstances.

Currently, consumer-oriented energy storage products (e.g., balcony photovoltaic energy storage systems) generally rely on a BMS (battery management system)-based proactive thermal prevention and control strategy. The strategy involves triggering derating or shutdown by monitoring temperatures of a battery cell 114 and key components (inverters, BMS, EMS (Energy Management System)) for cooling and risk prevention. However, with high integration of devices (integration of battery modules, BMS, EMS, and inverters), their internal environments have become increasingly complex, making it difficult for predetermined algorithms to cover all unexpected abnormalities. More critically, once the thermal runaway breaks through algorithmic defenses (e.g., smoke and fire emergence), the existing solutions lack prompt and effective emergency response measures.

On the other hand, although large-scale industrial and commercial energy storage systems are deployed with sophisticated firefighting systems (including multiple sensors, complex lines and even pipe networks), their design is based on specific prerequisites: first, ample space: deployed on exclusive sites (absent factories, independent power stations, port regions, factory roofs), without space density limitations; and second, insensitivity to cost and power consumption: the systems are bulky and relatively insensitive to high complexity, high cost, large volume, and high power consumption of the firefighting systems. Accordingly, the "high complexity, high cost, large volume, and high power consumption" characteristics of the industrial and commercial-grade firefighting systems make them completely incompatible with consumer-grade products such as the balcony energy storage systems, which are space-constrained, cost-sensitive, and power-constrained.

In summary, the current market urgently needs a firefighting solution tailored for consumer-oriented energy storage devices (especially highly integrated balcony energy storage systems).

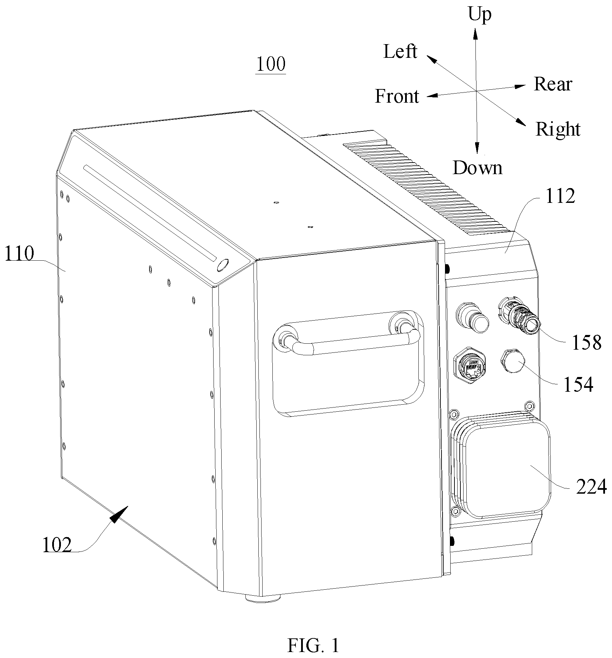

Referring to FIG. 1 to FIG. 6, an integrated energy storage unit 100 according to embodiments of the present disclosure includes an integrated unit case 102, a first battery module 104, an inverter circuit board 106, and a first firefighting module 108. The integrated unit case 102 includes a first battery box housing 110 and a heat sink housing 112 that are detachably connected to each other. A first battery module 104 is fixed in the first battery box housing 110. An inverter circuit board 106 is fixed in the heat sink housing 112. The first battery module 104 includes a plurality of battery cells 114 configured to store and output electrical energy. The inverter circuit board 106 is configured for a conversion between an alternating current and a direct current and heat dissipation to an exterior environment through the heat sink housing 112. The first firefighting module 108 is located in the integrated unit case 102. In this embodiment, the first firefighting module 108 is disposed in the first battery box housing 110, and the first firefighting module 108 includes a trigger mechanism 116, a fire-extinguishing agent storage compartment, and a release mechanism 118. It can be understood that the first firefighting module 108 is not limited to being disposed in the first battery box housing 110, but may also be located at an another position within the integrated unit case 102, for example, in the heat sink housing 112.

The trigger mechanism 116 is disposed in the firefighting detection region 120 in the integrated unit case 102 and configured to generate a trigger signal when a firefighting trigger condition in the firefighting detection region 120 is met. The fire-extinguishing agent storage compartment is configured to store a fire extinguishing agent. The release mechanism 118 is configured to, in response to the trigger signal from the trigger mechanism 116, release the fire extinguishing agent into a chamber where the first battery module 104 is located.

The above integrated energy storage unit 100, taking into account the characteristics of the consumer-oriented energy storage products, has elaborately designed a firefighting solution for the consumer-oriented energy storage products. It adopts a built-in firefighting design that is compact and economical, maintenance-free, efficient and reliable, without affecting appearance of an energy storage device 300.

Optionally, the integrated energy storage unit 100 may refer to an energy storage product in which the battery module and the inverter circuit board 106 are assembled in the integrated energy storage unit 100, which can meet design requirements of miniaturization and can be applied to space-limited usage scenarios, such as the household energy storage systems and the balcony energy storage systems.

The integrated unit case 102 is a component that can protect components of the integrated energy storage unit 100. Ingress of moisture, dust, etc., to energized components can be prevented and thus problems such as short circuits or corrosion-induced open circuits can be prevented. Meanwhile, the integrated unit case 102 can also have a thermal insulation effect to some extent. A material of the integrated unit case 102 includes but is not limited to metal (e.g., iron, aluminum). Optionally, the integrated unit case 102 may be covered with a protective layer (e.g., an anti-rust layer, an anti-oxidation layer) at an outer surface of the integrated unit case 102, allowing the integrated unit case 102 to withstand complex environmental changes.

The integrated unit case 102 includes a first battery box housing 110 and a heat sink housing 112. The first battery box housing 110 has a first mounting opening 122 at a side of the first battery box housing 110 facing towards the heat sink housing 112. The heat sink housing 112 has a second mounting opening 124 at a side of the heat sink housing 112 facing towards the first battery box housing 110. The detachable connection between the first battery box housing 110 and the heat sink housing 112 can be realized through the first mounting opening 122 and the second mounting opening 124. The detachable connection between the first battery box housing 110 and the heat sink housing 112 facilitates maintenance of the integrated energy storage unit 100. The detachable connection between the first battery box housing 110 and the heat sink housing 112 includes, but is not limited to, screws, snaps, etc.

The first battery module 104 may be fixed in the first battery box housing 110 by a connection including, but not limited to, a screw connection or the like. The first battery box housing 110 can protect and isolate the first battery module 104. The plurality of battery cells 114 of the first battery module 104 may be electrically connected in series, in parallel, or in a mixed manner thereof. The mixed connection means that the plurality of battery cells 114 are connected in parallel and in series. The battery cell 114 can be configured to store and output electrical energy. For example, the integrated energy storage unit 100 may be connected to an external power supply (e.g., a photovoltaic panel or an alternating-current power supply), and the battery cell 114 may be configured to store electrical energy inputted from the external power supply. For example, the integrated energy storage unit 100 may be connected to a load, and the battery cell 114 may be configured to output electrical energy to the load. The battery cell 114 includes, but is not limited to, lithium-ion batteries, sodium-ion batteries, etc.

The inverter circuit board 106 may be fixed in the heat sink housing 112 by a connection including, but not limited to, a screw connection or the like. The integrated energy storage unit 100 further includes a first battery management control board 126, and the inverter circuit board 106 may be electrically connected to the first battery module 104 by the first battery management control board 126. The inverter circuit board 106 may be configured for a conversion between an alternating current and a direct current. In one embodiment, the inverter circuit board 106 may be configured to convert a direct current outputted from the battery cell 114 into an alternating current adapted to supply power to the load. In one embodiment, the inverter circuit board 106 may be configured to convert an alternating current from the external power supply into a direct current adapted to charge the battery cell 114.

In one embodiment, the inverter circuit board 106 may be configured to perform power control and includes a DC/DC (direct-current/direct-current) converter and a DC/AC (direct-current/alternating-current) bidirectional converter, and an MPPT (Maximum Power Point Tracking) module, all of which are modules with relatively higher heat generation. The inverter circuit board 106 is disposed in the heat sink housing 112 and may be configured to dissipate heat generated during operation of the inverter circuit board 106 to an exterior of the integrated energy storage unit 100 promptly, thereby ensuring normal operation of the integrated energy storage unit 100 to some extent. Optionally, a heating element of the inverter circuit board 106 faces towards an inner surface of the heat sink housing 112.

Optionally, the heat sink housing 112 is provided with a heat dissipation fin 128 on a surface of the heat sink housing 112 facing away from the inverter circuit board 106. The heat dissipation fin 128 can increase a surface area of the heat sink housing 112, thereby improving heat dissipation efficiency. The heat dissipation fins 128 has a length direction oriented in an up-down direction of the integrated energy storage unit 100. In this way, a timely replenishment of cold air at a bottom of the heat dissipation fin 128 to the heat dissipation fin 128 is facilitated, thereby further improving the heat dissipation efficiency. Optionally, the inverter circuit board 106 is substantially of a flat shape and disposed in the up-down direction of the integrated energy storage unit 100, which can realize the timely dissipation of heat to the heat sink housing 112 to the greatest possible extent.

The first firefighting module 108 is configured to provide a firefighting function for the integrated energy storage unit 100. Among the components of the integrated energy storage unit 100, the first battery module 104 is a component that is more prone to thermal runaway. By disposing the first firefighting module 108 in the first battery box housing, when the first battery module 104 has a thermal runaway state, the first firefighting module 108 is capable of, in response to the occurrence of the thermal runaway state, releasing a fire extinguishing agent into the chamber where the first battery module 104 is located. Thus, the thermal runaway state of the first battery module 104 is suppressed at its early stage, which is critical for preventing further propagation of the thermal runaway. In this way, use safety of the integrated energy storage unit 100 is ensured. Optionally, the first firefighting module 108 is disposed in a region adjacent to the first battery module 104 in the first battery box housing 110.

The first firefighting module 108 includes a trigger mechanism 116, a fire-extinguishing agent storage compartment, and a release mechanism 118. The trigger mechanism 116 is disposed in a firefighting detection region 120 in the integrated unit case 102. Optionally, a thermal simulation test may be performed in the integrated unit case 102 of the integrated energy storage unit 100. A heat accumulation region in the integrated unit case 102 during the operation of the integrated energy storage unit 100, i.e., a region where the thermal runaway easily occurs, is determined by the thermal simulation test, and the heat accumulation region is selected as the firefighting detection region 120. Optionally, the firefighting detection region 120 is located in the first battery box housing 110. Preferably, the firefighting detection region 120 is located inside the first battery module 104 or is located in an electrode region of the first battery module 104. It can be understood that in other embodiments, the firefighting detection region 120 may also be an another position in the integrated unit case 102 of the integrated energy storage unit 100, which may be determined through simulation, testing, experience, etc.

The trigger mechanism 116 is configured to generate a trigger signal when a firefighting trigger condition in the firefighting detection region 120 is met. Optionally, the firefighting trigger condition being met in the firefighting detection region 120 may mean that a temperature of the firefighting detection region 120 is greater than or equal to a predetermined temperature, or that an air pressure of the firefighting detection region 120 is greater than or equal to a predetermined air pressure.

The fire-extinguishing agent storage compartment is configured to store a fire extinguishing agent to allow the fire extinguishing agent to be properly kept. Thus, when the firefighting trigger condition in the firefighting detection region 120 is met, the fire extinguishing agent can be released promptly and sufficiently by the release mechanism 118 to the chamber where the first battery module 104 is located. The fire-extinguishing agent storage compartment may adopt an atmospheric pressure storage method. With a design life of the energy storage device 300 exceeding 10 years, the fire-extinguishing agent storage compartment with the atmospheric pressure storage requires no periodic maintenance and inspection, making it highly suitable for the energy storage device 200.

The fire extinguishing agent may include, but is not limited to, a gaseous fire extinguishing agent, a water-based fire extinguishing agent, and other types of fire extinguishing agents. The gaseous fire extinguishing agent may include, but is not limited to, heptafluoropropane and perfluorohexanone. The water-based fire extinguishing agent includes, but is not limited to, high-pressure fine water mist and water-based gel. The other types of fire-extinguishing agent may include, but is not limited to, a dry powder fire-extinguishing agent, a hot aerosol, carbon dioxide, etc.

The release mechanism 118 can release, in response to the trigger signal from the trigger mechanism 116, the fire extinguishing agent into the chamber where the first battery module 104 is located. Accordingly, when the firefighting trigger condition in the firefighting detection region 120 is met, the fire-extinguishing agent can be released promptly and sufficiently to the chamber where the first battery module 104 is located. Thus, the thermal runaway state is suppressed at its early stage, which is critical for preventing the further propagation of thermal runaway. In this way, the use safety of the integrated energy storage unit 100 is ensured.

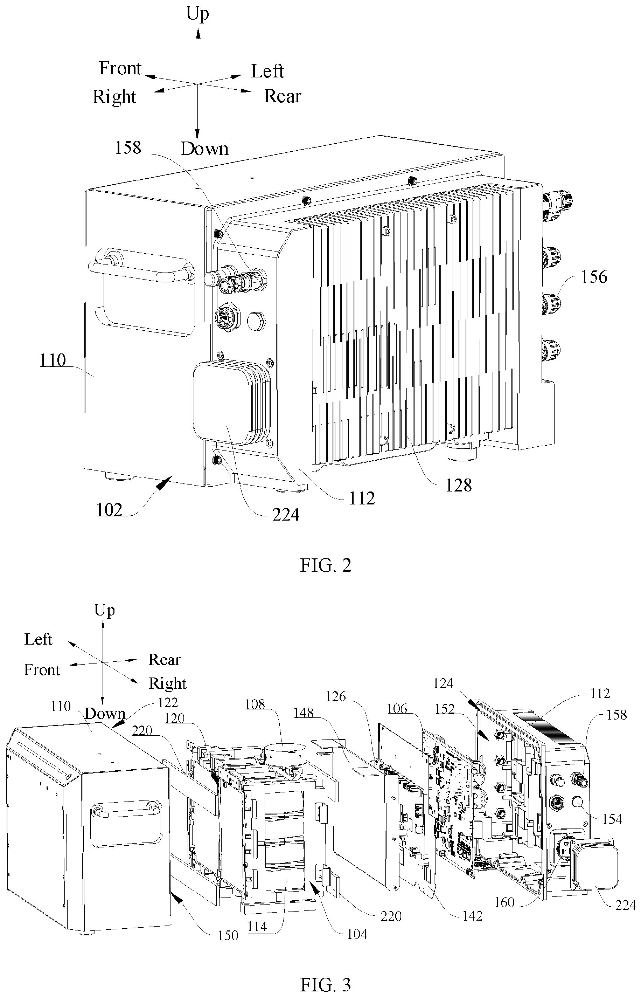

The first battery management control board 126 is electrically connected to the first battery module 104 and configured to monitor battery state information of the first battery module 104. The first battery management control board 126 may include a battery management system (BMS). Referring to FIG. 3 to FIG. 4, the first battery box housing 110 and the heat sink housing 112 are assembled together in a front-rear direction. The first battery box housing 110 at the front, and the heat sink housing 112 is at the rear. The first battery module 104, the first battery management control board 126, and the inverter circuit board 106 are sequentially arranged in the integrated unit case 102 from front to rear, facilitating miniaturization of the integrated energy storage unit 100.

In some embodiments, the first firefighting module 108 is a passive self-triggering firefighting module.

Therefore, the integrated energy storage unit 100 is more suitable for the balcony photovoltaic energy storage products with a relatively low capacitance.

Specifically, the passive self-triggering firefighting module may refer to a firefighting module that does not have an independent power supply, and can autonomously release a fire extinguishing agent without a power supply when the integrated energy storage unit 100 is in the thermal runaway state. Accordingly, even if the integrated energy storage unit 100 is equipped with the first firefighting module 108, the first firefighting module 108 basically does not consume electrical energy of the integrated energy storage unit 100, ensuring long-term power storage and power supply capacities of the integrated energy storage unit 100. In this way, the integrated energy storage unit 100 is more suitable for the balcony photovoltaic energy storage products with the relatively low capacitance.

In some embodiments, the trigger mechanism 116 includes a passive trigger mechanism. The passive trigger mechanism includes any one of a temperature detector, a smoke detector, or an air pressure detector. Therefore, it is possible to trigger the firefighting function without consuming the electrical energy of the integrated energy storage unit 100.

In one embodiment, the passive trigger mechanism may be self-triggered based on a physical/chemical mechanism. The self-triggering of the passive trigger mechanism based on the physical/chemical mechanism can require no power supply and does not consume the energy of the integrated energy storage unit 100, ensuring that more electrical energy is available for user consumption.

In one embodiment, the passive trigger mechanism is self-triggered based on a physical mechanism. The physical self-trigger firefighting mechanism is a pure mechanical emergency fire extinguishing technology that does not rely on power or control systems. It primarily realizes an automatic detection of a fire hazard and release of the fire extinguishing agent based on inherent physical properties of materials (e.g., a thermal-sensitive effect, a pressure change).

Specifically, the physical mechanism may include, but is not limited to, a thermally sensitive trigger mechanism and a pressure-linked trigger mechanism. The thermally sensitive trigger mechanism may mean that when the temperature of the firefighting detection region 120 reaches or is greater than a predetermined temperature, in response to the relatively higher temperature, the trigger mechanism 116 may generate a trigger signal, thereby enabling the release mechanism 118 to release the fire extinguishing agent into the chamber where the first battery module 104 is located. Optionally, under the thermally sensitive trigger mechanism, the passive trigger mechanism may include a thermal sensitive wire 130, which may be disposed in the firefighting detection region 120. When a temperature of a firefighting detection reaches or is greater than a melting temperature of the thermal sensitive wire 130, the release mechanism 118 is configured to, in response to the trigger signal from the trigger mechanism 116, releases the fire extinguishing agent into the chamber where the first battery module 104 is located.

The pressure-linked trigger mechanism may mean that when a pressure of the firefighting detection region 120 reaches or is greater than a predetermined pressure, in response to the relatively higher pressure, the trigger mechanism 116 may generate a trigger signal, thereby causing the release mechanism 118 to release the fire-extinguishing agent into the chamber where the first battery module 104 is located. Optionally, under the pressure-linked trigger mechanism, the passive trigger mechanism may include a mechanical pressure relief valve. The mechanical pressure relief valve is configured to eject high-pressure gas outward in the thermal runaway state of the battery cell 114. When the pressure is greater than or equal to the predetermined pressure, the mechanical pressure relief valve is automatically opened and be linked with the release mechanism 118, to release the fire extinguishing agent into the chamber where the first battery module 104 is located.

In one embodiment, the passive trigger mechanism is self-triggered based on a chemical mechanism. The chemical self-triggering firefighting mechanism is a technology that realizes an automatic detection of a fire hazard and release of the fire extinguishing agent based on inherent physical and chemical properties of materials (e.g., thermally sensitive degradation, gas-generating chemical reaction). Specifically, it involves activating a firefighting system through an autonomous reaction of chemical substances at high temperatures or specific conditions, without intervention of an external power or a control system.

Specifically, the chemical self-triggering mechanism may include a thermosensitive polymer bursting mechanism and a drive with gas generated from chemical decomposition. Under the thermosensitive polymer bursting mechanism, the passive trigger mechanism may include a fire detection tube, in which a low-melting point copolymer is provided (e.g., ethylene vinyl acetate). The fire detection tube is located in the firefighting detection region 120. When the temperature of the firefighting detection region 120 reaches or is greater than the predetermined temperature (e.g., 72°C to 90°C), polymer molecular chains are fractured and softened, and a pressure of internal drive gas (e.g., nitrogen) exceeds a limit of a tube wall, causing directional bursting. At a moment of the bursting, the fire-extinguishing agent is driven to be accurately ejected to a heat source point through a crack.

Under the mechanism of a drive by gas generated from chemical decomposition, the passive trigger mechanism may include a gas generation agent. For the gas generation agent, a solid gas-generating agent (e.g., nitrocellulose) is added to the fire-extinguishing agent storage compartment. When heat generated by the thermal runaway is conducted to the fire-extinguishing agent storage compartment, the gas-generating agent is quickly decomposed to release a large amount of gas (e.g., CO₂/N₂), to promote the fire-extinguishing agent to be ejected at a high speed.

The passive trigger mechanism includes any one of a temperature detector, a smoke detector, or an air pressure detector. Therefore, a passively triggered firefighting function can be realized through any of a temperature, smoke, and an air pressure.

In one embodiment, the passive trigger mechanism includes a temperature detector. The temperature detector may be disposed in the firefighting detection region 120 and is configured to detect a temperature of the firefighting detection region 120. When the temperature of the firefighting detection region 120 is greater than or equal to the predetermined temperature, in response to the high temperature, the passive trigger mechanism may generate a trigger signal, thereby causing the release mechanism 118 to release the fire extinguishing agent into the chamber where the first battery module 104 is located.

In one embodiment, the passive trigger mechanism includes a smoke detector. The smoke detector may be disposed in the firefighting detection region 120 and is configured to detect a smoke concentration of the firefighting detection region 120. When the smoke concentration of the firefighting detection region 120 is greater than or equal to a predetermined concentration, in response to the high-concentration smoke, the passive trigger mechanism may generate a trigger signal, thereby causing the release mechanism 118 to release a fire-extinguishing agent into the chamber where the first battery module 104 is located.

In one embodiment, the passive trigger mechanism includes an air pressure detector. The air detector may be disposed in the firefighting detection region 120 and is configured to detect an air pressure of the firefighting detection region 120. When the air pressure of the firefighting detection region 120 is greater than or equal to a predetermined air pressure, in response to the high air pressure, the passive trigger mechanism may generate a trigger signal, thereby causing the release mechanism 118 to release a fire extinguishing agent into the chamber where the first battery module 104 is located.

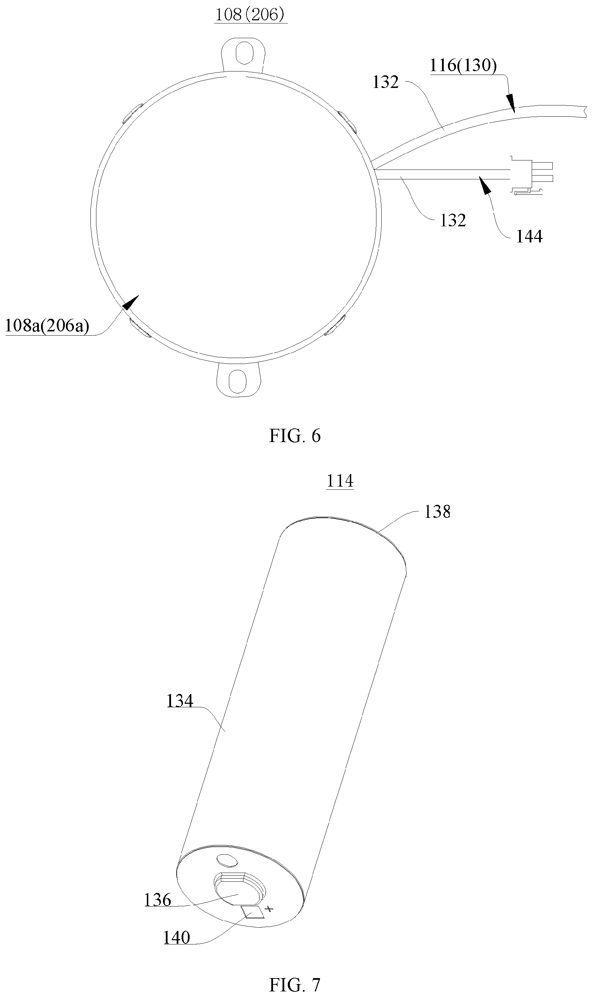

In some embodiments, the temperature detector is a flexible temperature detector. Referring to FIG. 6, the flexible temperature detector includes a thermal sensitive wire 130 disposed in the firefighting detection region 120. The thermal sensitive wire 130 is configured to, when a temperature of the firefighting detection region 120 is greater than or equal to a combustion temperature of the thermal sensitive wire 130, burn and trigger the first firefighting module 108 to release the fire extinguishing agent through the release mechanism 118.

Therefore, the arrangement of the temperature detector is facilitated.

Specifically, since the temperature detector is the flexible temperature detector, its shape may be adjusted according to the mounting region. Accordingly, the temperature detector can be disposed in the firefighting detection region 120 of the integrated energy storage unit 100 by means of deformation of the temperature detector, without changing internal space of the integrated energy storage unit 100 or without excessive modification to a layout of the internal space of the integrated energy storage unit 100. In this way, there is no need to reserve additional mounting space for the temperature detector, which is beneficial to maintaining compactness of the integrated energy storage unit 100. The flexible temperature detector is more suitable for products with very limited space such as a balcony energy storage system.

For example, the flexible temperature detector may be bent according to the internal space of the integrated energy storage unit 100 such that it is disposed in original internal space of the integrated energy storage unit 100. Thus, the flexible temperature detector can be disposed in the firefighting detection region 120 without providing the additional space for the flexible temperature detector.

The flexible temperature detector includes the thermal sensitive wire 130. The thermal sensitive wire 130 is burned when its temperature is too high, so as to perform a triggering action, which is simple and efficient and more suitable for the balcony energy storage products.

Specifically, the thermal sensitive wire 130 is configured to, when a temperature of the firefighting detection region 120 is greater than or equal to a combustion temperature of the thermal sensitive wire 130, burn and in turn trigger the first firefighting module 108 to release the fire extinguishing agent through the release mechanism 118.

In one embodiment, when the thermal sensitive wire 130 is burned, heat generated by its combustion may be transferred to the fire-extinguishing agent storage compartment to activate the fire extinguishing agent. The release mechanism 118 can release the fire extinguishing agent into the chamber where the first battery module 104 is located.

In some embodiments, referring to FIG. 6, a fiberglass tube 132 is sleeved around the thermal sensitive wire 130.

Therefore, the fiberglass tube 132 can provide a protective function, such as mechanical stress buffering and chemical corrosion protection, thereby preventing the thermal sensitive wire 130 from fracturing and ensuring that the trigger signal can be transmitted promptly.

Specifically, the integrated energy storage unit 100 may need to be transported from factories, shops, etc., to end-user premises. During transportation and handling, mechanical stress is generated due to vibration of the integrated energy storage unit 100. With the fiberglass tube 132 sleeved around the thermal sensitive wire 130, the mechanism stress applied to the thermal sensitive wire 130 is buffered by the fiberglass tube 132, thereby preventing the fracture of the thermal sensitive wire 130 caused by the mechanical stress applied thereto to some extent, which would otherwise lead to a failure of the passive firefighting function.

The integrated energy storage unit 100 may be placed outdoors for long-term use (such as on a balcony). Factors such as outdoor ambient temperature and humidity may cause the fracture of the thermal sensitive wire 130 due to chemical corrosion. With the fiberglass tube 132 sleeved around the thermal sensitive wire 130, the thermal sensitive wire 130 is separated from an exterior environment of the thermal sensitive wire 130 by the fiberglass tube 132, thereby preventing the fracture of the thermal sensitive wire 130 due to the chemical corrosion to some extent, and preventing the failure of the passive firefighting function.

In summary, it can be ensured that the thermal sensitive wire 130 can promptly trigger and transmit the trigger signal when the firefighting trigger condition in the firefighting detection region 120 is met.

In one embodiment, the firefighting detection region 120 is located inside the first battery module 104. When the first battery module 104 is in a thermal runaway state inside the first battery module 104, heat is transferred to the trigger mechanism 116 from inside of the first battery module 104, causing the trigger mechanism 116 to generate the trigger signal promptly. Accordingly, the release mechanism 118 is enabled to release a fire extinguishing agent into the chamber where the first battery module 104 is located. In this way, the thermal runaway state is suppressed at its early state, preventing the propagation of the thermal runaway state.

In one embodiment, referring to FIG. 3, the firefighting detection region 120 is located in an electrode region of the first battery module 104. Therefore, a response speed of the trigger mechanism 116 is further improved.

Specifically, the first battery module 104 includes a plurality of battery cells 114. Each of the plurality of battery cells 114 includes a battery cell body 134, a positive electrode 136, and a negative electrode 138. In one embodiment, referring to FIG. 7, the positive electrode 136 and the negative electrode 138 are respectively located at two opposite ends of the battery cell body 134, and the electrode region may refer to a side where the positive electrode 136 of the battery cell 114 is located and a side where the negative electrode 138 of the battery cell 114 is located. In one embodiment, the positive electrode 136 and the negative electrode 138 are located at the same end of the battery cell body 134, and the electrode region may refer to the side where the positive and negative electrodes 136, 138 of the battery cell 114 are located.

The battery cell 114 is charged or discharged during the operation of the integrated energy storage unit 100. As a current flows through the positive electrode 136 and the negative electrode 138, relatively more heat is generated by the positive electrode 136 and the negative electrode 138. When the battery cell 114 is in a thermal runaway state, a temperature of each of the positive electrode 136 and the negative electrode 138 is typically relatively high. The firefighting detection region 120 is the electrode region of the first battery module 104, and thus the heat generated in the thermal runaway state can be transferred to the trigger mechanism 116 promptly and rapidly, causing the trigger mechanism 116 to generate a trigger signal. Thus, the release mechanism 118 is enabled to release promptly the fire extinguishing agent into the chamber where the first battery module 104 is located.

In addition, the battery cell 114 further includes an explosion-proof valve 140, which is typically disposed at a side surface of the battery cell body 134 where the electrodes are located. When the battery cell 114 is in the thermal runaway state, the explosion-proof valve 140 may eject high-temperature and high-pressure substances, and thus the trigger mechanism 116 can also respond quickly to generate the trigger signal.

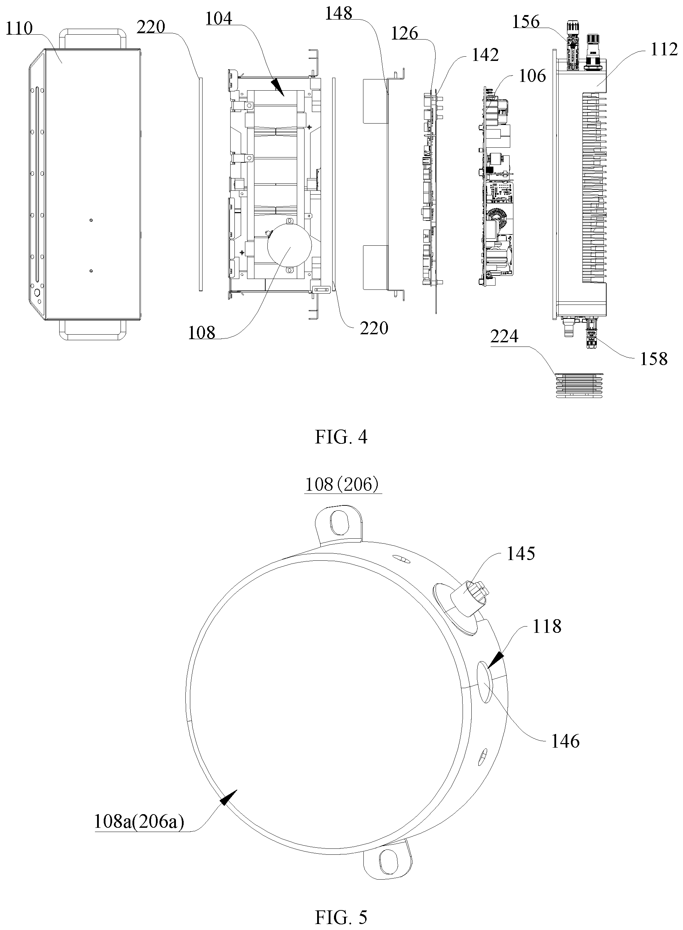

In some embodiments, referring to FIG. 3 and FIG. 4, the integrated energy storage unit 100 further includes a first battery management control board 126 electrically connected to the first battery module 104. The first battery management control board 126 is configured to monitor the battery state information of the first battery module 104. The trigger mechanism 116 includes an active trigger mechanism electrically connected to the first battery management control board 126. The first battery management control board 126 is configured to, in response to the battery state information monitored by the first battery management control board indicating a thermal runaway state, send a control signal to the active trigger mechanism. The active trigger mechanism is configured to, in response to the control signal, trigger the first firefighting module 108 to release the fire extinguishing agent through the release mechanism 118.

Therefore, the active trigger approach of the integrated energy storage unit 100 can be realized.

Optionally, the first battery management control board 126 is fixed in the heat sink housing 112 through the support plate 142. The support plate 142 is located between the first battery management control board 126 and the inverter circuit board 106. The support plate 142 can insulate heat generated by the inverter circuit board 106 from being transferred to the first battery management control board 126, thereby preventing or reducing adverse impacts of the heat from the inverter circuit board 106 on the first battery management control board 126 to some extent.

The integrated energy storage unit 100 further includes a busbar component and a sampling component. The busbar component is electrically connected to the plurality of battery cells 114, thereby enabling the electrical connection to be formed between the plurality of battery cells 114 in series, in parallel, or in a mixed manner thereof. The sampling component may be connected to each of the busbar component and the first battery management control board 126, and the first battery management control board 126 is configured to monitor the battery state information of the first battery module 104 through the sampling component. The battery state information includes but is not limited to a current, a voltage, a temperature, etc.

In one embodiment, when the current is greater than or equal to a predetermined current, the battery state information may indicate the thermal runaway state. In one embodiment, when the temperature is greater than or equal to a predetermined temperature, the battery state information may indicate the thermal runaway state. The first battery management control board 126 is configured to send a control signal to the active trigger mechanism.

The active trigger mechanism is electrically connected to the first battery management control board 126. The active trigger mechanism can be configured to receive the control signal sent by the first battery management control board 126 and trigger, in response to the received control signal, the first firefighting module 108 to release the fire extinguishing agent through the release mechanism 118 into the chamber where the first battery module 104 is located.

In some embodiments, the active trigger mechanism is an electric initiator, and the control signal is an electric activation signal. The electric activation signal includes a current or voltage signal generated when a closed state is switched to an open state, or when an open state is switched to a closed state.

Therefore, in response to the electric activation signal, the active trigger mechanism may trigger the first firefighting module 108 to release the fire extinguishing agent through the release mechanism 118.

Specifically, the electric initiator may be disposed in a module body of the first firefighting module 108 and may be connected to a dry contact of the first battery management control board 126 by a wire harness 144.

In one embodiment, the first battery management control board 126 includes a detection circuit. Optionally, the detection circuit is in the closed state when the battery state information indicates a non-thermal runaway state. The detection circuit may be switched from the closed state to the open state when the battery state information indicates the thermal runaway state, thereby enabling the first battery management control board 126 to output the current signal or the voltage signal.

Optionally, the detection circuit is in the open state when the battery state information indicates a non-thermal runaway state. The detection circuit may be switched from the open state to the closed state when the battery state information indicates the thermal runaway state, thereby enabling the first battery management control board 126 to output a current signal or a voltage signal.

When the battery state information indicates the thermal runaway state, the first battery management control board 126 can transmit the electric activation signal to the electric initiator via the wire harness 144. The first firefighting module 108 is triggered by the electric initiator to release the fire extinguishing agent through the release mechanism 118 into the chamber where the first battery module 104 is located.

Optionally, referring to FIG. 5, the first firefighting module 108 is provided with a connection portion 145 at the module body of the first firefighting module 108, and the electric initiator may be connected to the wire harness 144 by the connection portion 145.

In some embodiments, referring to FIG. 6, a fiberglass tube 132 is sleeved around the wire harness 144 connected to the electric initiator.

Therefore, the fiberglass tube 132 can provide a protective function, such as mechanical stress buffering and chemical corrosion protection, thereby preventing the wire harness 144 from fracturing and ensuring that the electric activation signal can be transmitted promptly.

Specifically, the integrated energy storage unit 100 may need to be transported from factories, shops, etc., to end-user premises. During transportation and handling, mechanical stress is generated due to vibration of the integrated energy storage unit 100. With the fiberglass tube 132 sleeved around the wire harness 144 connected to the electric initiator, the mechanism stress applied to the wire harness 144 is buffered by the fiberglass tube 132, thereby preventing the fracture of the wire harness 144 caused by the mechanical stress applied thereto to some extent, and preventing a failure of the active firefighting function.

The integrated energy storage unit 100 may be placed outdoors for long-term use (such as on a balcony). Factors such as outdoor ambient temperature and humidity may cause the fracture of the wire harness 144 due to chemical corrosion. With the fiberglass tube 132 sleeved around the wire harness 144, the wire harness 144 is separated from an exterior environment of the wire harness 144 by the fiberglass tube 132, thereby preventing the fracture of the wire harness 144 due to the chemical corrosion to some extent, which would otherwise lead to the failure of the active firefighting function.

In summary, it can be ensured that the wire harness 144 can promptly transmit the electric activation signal to the electric initiator when the battery state information indicates the thermal runaway state.

In some embodiments, referring to FIG. 5, the module body of the first firefighting module 108 is of a flat shape.

Therefore, it is not necessary to provide additional space or excessive additional space for the module body of the first firefighting module 108, facilitating maintaining compactness of the integrated energy storage unit 100.

Specifically, the module body of the first firefighting module 108 may be the first module body 108a, and the fire-extinguishing agent storage compartment is disposed in the module body of the first firefighting module 108. The release mechanism 118 may be disposed at a surface of the module body, and the trigger mechanism 116 is connected to the module body. The module body of the first firefighting module 108 accounts for a large proportion of a total volume of the first firefighting module 108. More space is required to place the module body when mounting the first firefighting module 108. The first module body 108a is of a flat shape, and the module body may be disposed in an original flat space in the integrated unit case 102 or in a space which is slightly enlarged from an original flat space, facilitating maintaining the compactness of the integrated energy storage unit 100.

In some embodiments, the module body of the first firefighting module 108 is fixed to an inner wall surface of the first battery box housing 110.

Therefore, the module body of the first firefighting module 108 may be disposed close to the first battery module 104, thereby enabling the first firefighting module 108 to rapidly respond to the thermal runaway state of the first battery module 104.

Specifically, the first battery module 104 is disposed in the first battery box housing 110, the inner wall surface of the first battery box housing 110 faces towards the first battery module 104, and the module body of the first firefighting module 108 is fixed to the inner wall surface of the first battery box housing 110. Thus, the module body of the first firefighting module 108 can be brought closer to the first battery module 104. When the firefighting trigger condition in the firefighting detection region 120 is met, the trigger mechanism 116 can generate the trigger signal promptly, and thus the fire extinguishing agent released by the release mechanism 118 can reach the first battery module 104 faster, suppressing the thermal runaway state faster.

The module body of the first firefighting module 108 may be fixed to the inner wall surface of the first battery box housing 110 by a connection including, but not limited to, screws, snaps, etc.

In some embodiments, a distance between the inner wall surface of the first battery box housing 110 selected for the module body of the first firefighting module 108 and the first battery module 104 is greater than a mounting distance of the module body of the first firefighting module 108.

Therefore, the fire extinguishing agent can be released more smoothly and efficiently into the chamber where the first battery module 104 is located.

Specifically, the release mechanism 118 may be disposed at a surface of the module body of the first firefighting module 108. In order to improve operating efficiency of the first firefighting module 108, the module body of the first firefighting module 108 has a requirement of the mounting distance. The mounting distance is set in such a way that the release mechanism 118 can release the fire extinguishing agent more efficiently and smoothly into the chamber where the first battery module 104 is located. Accordingly, with the distance between the inner wall surface of the first battery box housing 110 selected for the module body of the first firefighting module 108 and the first battery module 104 being greater than the mounting distance of the module body of the first firefighting module 108, the fire extinguishing agent can be released more smoothly and efficiently into the chamber where the first battery module 104 is located. In one example, the requirement of the mounting distance specifies that there should be no obstruction within a range of 0.05 meters from the release mechanism 118 (such as a nozzle 146).

In some embodiments, referring to FIG. 5, the release mechanism 118 includes a nozzle 146 located at a shell of the first firefighting module 108, and the nozzle 146 is disposed close to the first battery module 104.

Therefore, fire extinguishing accuracy of the fire extinguishing agent can be improved.

In one embodiment, the module body of the first firefighting module 108 is of a flat cylindrical shape, and the nozzle 146 may be disposed in a circumferential side surface of the shell of the module body. The nozzle 146 has a central axis parallel to a length direction of the battery cell body 134 of the battery cell 114, enabling the nozzle 146 to be disposed close to the first battery module 104.

In one embodiment, an angle may be formed between the central axis of the nozzle 146 and the length of the battery cell body 134 of the battery cell 114, which may be 90 degrees or an acute angle.

It can be understood that the shape of the module body of the first firefighting module 108 is not limited in the present disclosure.

In some embodiments, referring to FIG. 3 and FIG. 4, the integrated unit case 102 further includes a partition 148 configured to divide the integrated unit case 102 into a first chamber 150 and a second chamber 152. The first chamber 150 is enclosed by the first battery box housing 110 and the partition 148, and the second chamber 152 is enclosed by the heat sink housing 112 and the partition 148.

Therefore, after the release of the fire extinguishing agent, flame-retardant substances is accumulated in the first chamber 150 by means of the partition 148, and a concentration of the fire extinguishing agent above a predetermined threshold in the first chamber 150 is maintained for a predetermined time period to prioritize flame-retardant treatment of the most dangerous first battery module 104. Subsequently, the flame-retardant substances can diffuse to other components in the second chamber 152 through a gap between the partition 148 and the integrated unit case 102 and/or a wire trough opening of the partition 148, thereby achieving a better fire-extinguishing effect.

Specifically, the partition 148 may serve to fix the first battery module 104. After the partition 148 is mounted and fixed to the first battery box housing 110, a force is applied towards the first battery module 104 to prevent the first battery module 104 from shaking. Optionally, a side of the first battery box housing 110 facing towards the heat sink housing 112 is an open side, and the partition 148 may be disposed at the open side. Accordingly, the first chamber 150 is formed by the cooperation of the first battery box housing 110 and the partition 148. The gap is formed between the partition 148 and the inner wall surface of the first battery box housing 110. The partition 148 has the wire trough opening configured to allow a connection wire between the first battery module 104 and the first battery management control board 126 to pass through. During the normal operation of the integrated energy storage unit 100, the partition 148 can separate the first battery module 104 from the first battery management control board 126, thereby reducing or avoiding adverse effects of heat generated by the first battery module 104 on the first battery management control board 126.

The first battery module 104 is located in the first chamber 150, and the first battery management control board 126 and the inverter circuit board 106 are both located in the second chamber 152. The trigger mechanism 116 can be configured to generate a trigger signal when the firefighting trigger condition in the firefighting detection region 120 is met. The release mechanism 118 is configured to, in response to the trigger signal, release the fire extinguishing agent to the first chamber 150. The released fire extinguishing agent is preferentially accumulated in the first chamber 150 to perform the flame-retardant treatment on the first battery module 104. The partition 148 can prolong a retention time period of the fire extinguishing agent in the chamber where the first battery module 104 is located. As the fire extinguishing agent accumulates in the first chamber 150, the fire extinguishing agent may be diffused into the second chamber 152 through the gap between the partition 148 and the inner wall surface of the first battery box housing 110 and/or the wire trough opening of the partition 148. Then, the flame retardant treatment is performed on the first battery management control board 126 and the inverter circuit board 106 that are located in the second chamber 152, thereby achieve a better fire extinguishing effect.

The first firefighting module 108 is located in the first chamber 150.

Therefore, the release mechanism 118 can directly release the fire extinguishing agent into the first chamber 150 when the firefighting trigger condition in the firefighting detection region 120 is met, thereby improving fire extinguishing efficiency.

Specifically, with the first firefighting module 108 located in the first chamber 150, the release mechanism 118 is also located in the first chamber 150. The trigger mechanism 116 can generate the trigger signal when the firefighting trigger condition in the firefighting detection region 120 is met. The release mechanism 118 is configured to, in response to the trigger signal, directly release the fire extinguishing agent into the first chamber 150. The fire extinguishing agent can be in contact with the first battery module 104 immediately to perform the flame-retardant treatment on the first battery module 104, reducing a time period from the ejection of the fire extinguishing agent to a state when the fire extinguishing agent is in contact with the first battery module 104, thereby improving the fire extinguishing efficiency.

In some embodiments, referring to FIG. 1 and FIG. 2, the heat sink housing 112 is provided with a breather valve 154.

Therefore, the fire extinguishing effect can be fully ensured.

Specifically, in the related art, the breather valve is configured to balance an air pressure inside the case of the energy storage device and an air pressure outside the case of the energy storage device, to prevent an explosion caused by a sudden increase in the internal pressure in the case that the battery cell is in the thermal runaway state. However, after the fire extinguishing agent is released, if the breather valve 154 is located at the first battery box housing 110, the fire extinguishing agent is leaked rapidly, reducing the fire extinguishing efficiency.

In this embodiment, 1) the breather valve 154 is relocated. Specifically, the breather valve 154 is disposed at the heat sink housing 112, away from the chamber where the first battery module 104 is located, to avoid an issue that a part of the released fire extinguishing agent directly enters the second chamber 152 to reduce the amount of the fire extinguishing agent in the first chamber 150 and thus deteriorate the fire extinguishing effect.

2) an air pressure buffer structure is added. Specifically, the partition 148 is disposed between the first battery box housing 110 and the heat sink housing 112 to provide a space for accumulation while acting as a barrier to airflow passage. The released fire extinguishing agent needs to be diffused into the gap between the first battery box housing 110 and the partition 148 and/or the wire trough opening of the partition 148 before entering the second chamber 152, thereby prolonging the retention time period of the fire extinguishing agent in the first chamber 150. Through the above design, the retention time period of the fire extinguishing agent in the first chamber 150 is prolonged, and its amount is increased, ensuring a sufficient fire extinguishing effect.

In some embodiments, referring to FIG. 1 to FIG. 4, the heat sink housing 112 is further provided with a photovoltaic connection terminal 156, a grid connection terminal 158, and an alternating-current load output terminal 160.

Therefore, the use of the wires or the like can be reduced, reducing costs.

Specifically, the inverter circuit board 106 may serve as a circuit board for outputting and inputting electrical energy of the integrated energy storage unit 100. The photovoltaic connection terminal 156, the grid connection terminal 158, and the alternating-current load output terminal 160 are disposed at the heat sink housing 112, which can reduce a distance between the connection terminal and the inverter circuit board 106. Thus, the use of the wires and the other materials is reduced, lowering the costs. Meanwhile, the connection terminal is close to the inverter circuit board 106, which is convenient for connecting the connection terminal to the inverter circuit board 106.

The photovoltaic connection terminal 156 may be connected to a photovoltaic panel. A direct current generated by the photovoltaic panel may be inputted to the inverter circuit board 106 via the photovoltaic connection terminal 156. The inverter circuit board 106 can perform a boost conversion for a voltage of the direct current and convert the voltage into a voltage suitable for charging the first battery module 104 and/or an energy storage-power expansion pack 200. The first battery management control board 126 can charge the first battery module 104 and/or the energy storage-power expansion pack 200 using the converted voltage.

The grid connection terminal 158 may be connected to a power grid. As a result, the integrated energy storage unit 100 is grid-connected to the power grid, realizing bidirectional flow and intelligent scheduling of the electrical energy. The alternating-current load output terminal 160 may be connected to an alternating-current load, and the inverter circuit board 106 can convert a direct current outputted from the first battery module 104 or a direct current outputted from the energy storage-power expansion pack 200 into an alternating current adapted to supply power to the alternating-current load.

In the embodiments of the present disclosure, each of the above connection terminals is a part protruding outwards. In terms of design, a sum of a width of the heat sink housing 112 in a left-right direction and a length of the connection terminal should not exceed a left-right width of the first battery box housing 110, for the connection terminal has relatively weak stress resistance and may be broken under force. If the connection terminal protrudes excessively, the connection terminal has a risk of breaking during its transportation and handling. Based on this consideration, after the heat sink housing 112 reserves space for the connection terminal, its dimension in the left-right direction has to be compressed. Thus a dimension of the inverter circuit board 106 fixed at the heat sink housing 112 also needs to be compressed. However, in order to ensure functional integrity of the inverter circuit board 106 and electrical isolation requirements such as electromagnetic compatibility, EMC, a layout area required by the components cannot be over-compressed, that is, an overall area of the inverter circuit board 106 cannot be compressed. Accordingly, after the left-right dimension is compressed, a dimension in an upper-down height direction need to be expanded.

Based on the above design considerations, after the heat sink housing 112 is expanded in the upper-lower height direction, the first battery box housing 110 has redundant space in the height direction to adapt to a shape and the dimension of the heat sink housing 112. The first battery module 104 is typically fixed at a lower inner wall surface of the first battery box housing 110. In an embodiment shown in FIG. 3, the module body of the first firefighting module 108 is preferably mounted at an upper inner wall surface of the first battery box housing 110. It can be understood that in other embodiments, the module body of the first firefighting module 108 may also be disposed at other inner wall surfaces except for the upper inner wall surface and the lower wall surface of the first battery box housing 110.

Optionally, the first battery module 104 includes a first battery support 162 and a plurality of battery cells 114. The first battery support 162 is configured to fix the plurality of battery cells 114 to form the first battery module 104. The module body of the first firefighting module 108 faces towards a side of the first battery support 162 where the battery cell 114 is exposed.

In some embodiments, the fire extinguishing agent is an aerosol fire extinguishing agent.

Therefore, the fire extinguishing agent can be stored at room pressure, eliminating a need to lay a pipe network. The aerosol fire extinguishing agent is non-toxic and non-corrosive, does not destroy an atmospheric ozone layer, and is environmentally friendly.

Optionally, the aerosol fire extinguishing agent may be a thermal aerosol fire extinguishing agent. A fire extinguishing mechanism of thermal aerosols primarily manifests in two aspects: on the one hand, a cooling effect of endothermic decomposition; and on the other hand, chemical inhibitory effects of gas and solid phases that operate synergistically with each other. In addition, gas-phase components in a product of the aerosol fire extinguishing agent also provide a certain auxiliary effect.

Specifically, (1) cooling and fire extinguishing effect of endothermic decomposition: The cooling effect of the thermal aerosol fire extinguishing agent mainly relies on endothermic decomposition of metal oxides and carbonates. Heat released by any fire hazard in a short time period is limited. If solid particles in aerosols can absorb part of heat released by a fire source in a short time period, a temperature of flame decreases, and thus heat radiated to a combustion surface and used to pyrolyze the vaporized combustible molecules into free radicals is reduced. In this way, the combustion reaction is thus suppressed to some extent.

### (2) Gas-phase chemical inhibition effect

Under the action of the heat, vaporized metal ions such as Sr, K, Mg, decomposed by the thermal aerosol fire extinguishing agent or electron-lost cations exist in the form of vapor, and undergo multiple chain reactions with active groups H•, •OH, and O• in a combustion process. Sr is taken as an example below for illustration:
Sr+2•OH→Sr(OH)₂, Sr+O•→SrO; and Sr(OH)₂+2H•→Sr+2H₂O.

Through such repeated reactions, the active groups in the combustion process are largely consumed, and their concentrations are continuously reduced. In this way, the combustion is suppressed.

### (3) Solid-phase chemical inhibition effect

Solid particles in the thermal aerosol fire extinguishing agents can adsorb chain reaction intermediates •OH, H•, and O• and catalyze their recombination into stable molecules, thereby interrupting branched chain reactions of the combustion process. K is taken as an example below for illustration:
K₂O(s)+2H(g)→2KOH(s); KOH(s)+OH(g)→KO(s)+H₂O(g);
K₂O(s)+O(g)→2KO(s), KO(s)+H(g)→KOH.

In the above fire extinguishing effects, the several fire extinguishing mechanisms interact with each other and exert a synergistic effect. However, the gas transmission effect and the endothermic cooling effect of the metal oxides or the carbonates only provide the auxiliary effect, while the primary fire-extinguishing effect depends on the chemical inhibition effects of the gas and solid phases.

When the integrated energy storage unit 100 is in the thermal runaway state, after the electric activation signal is received by the module body of the first firefighting module 108 or the thermal sensitive wire 130 is ignited by flames, and an aerosol generating agent in the module body is activated by the electric initiator or the ignition of the thermal sensitive wire 130. A chemical coolant is decomposed by heat released by the aerosol generating agent through a redox reaction, enabling the aerosol generating agent and the coolant to cooperate in fire extinguishing.

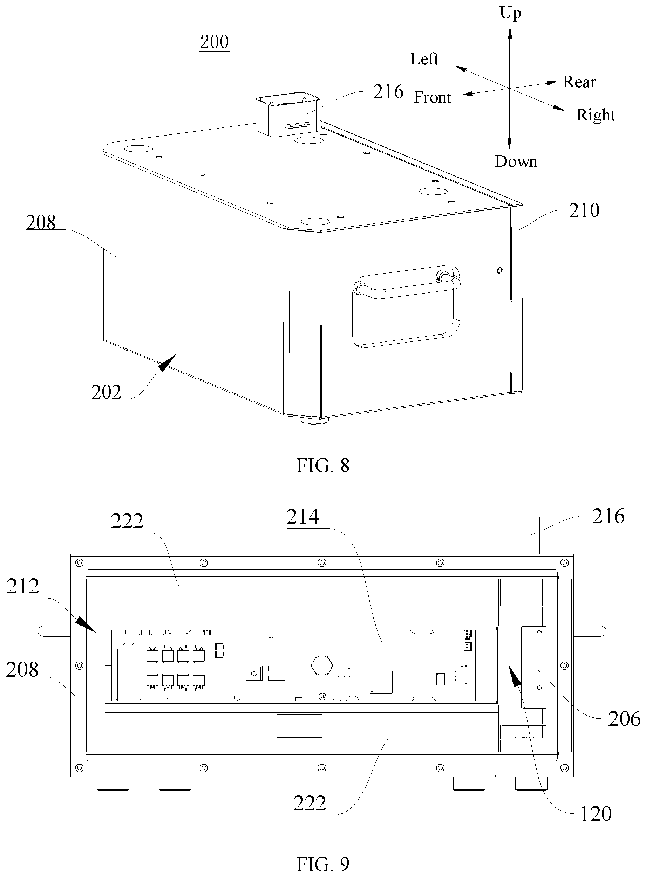

Referring to FIG. 8 to FIG. 11, an energy storage-power expansion pack 200 according to embodiments of the present disclosure is configured to be electrically connected to the integrated energy storage unit 100 to expand capacity of the integrated energy storage unit 100. The energy storage-power expansion pack 200 includes a power-expansion pack case 202, a second battery module 204, and a second firefighting module 206. The power-expansion pack case 202 includes a second battery box housing 208 and a cover plate 210 that are detachably connected to each other. A second battery module 204 is fixed in the second battery box housing 208. The cover plate 210 is configured to close a mounting opening 212 of the second battery box housing 208.

The second battery module 204 includes a plurality of battery cells 114 configured to store and output electrical energy. The second firefighting module 206 is disposed in the power-expansion pack case 202. The second firefighting module 206 includes a trigger mechanism 116, a fire-extinguishing agent storage compartment, and a release mechanism 118. The trigger mechanism 116 is disposed in a firefighting detection region 120 in the power-expansion pack case 202 and configured to generate a trigger signal when a firefighting trigger condition in the firefighting detection region 120 is met. The fire-extinguishing agent storage compartment is configured to store a fire extinguishing agent. The release mechanism 118 is configured to, in response to the trigger signal from the trigger mechanism 116, release the fire extinguishing agent into a chamber where the second battery module 204 is located.

The above energy storage-power expansion pack 200, taking into account the characteristics of the consumer-oriented energy storage products, has elaborately designed a firefighting solution for the consumer-oriented energy storage products. It adopts a built-in firefighting design that is compact and economical, maintenance-free, efficient and reliable, without affecting appearance of an energy storage device 300.

Specifically, the energy storage-power expansion pack 200 can expand the capacity of the integrated energy storage unit 100. The energy storage-power expansion pack 200 and the integrated energy storage unit 100 can form the energy storage device 300. In one embodiment, the integrated energy storage unit 100 may be used independently. In one embodiment, the energy storage-power expansion pack 200 and the integrated energy storage unit 100 may be used in combination. The integrated energy storage unit 100 may be used in combination with at least one energy storage-power expansion pack 200. The number of energy storage-power expansion packs 200 of the energy storage device 300 is not limited in the present disclosure.

The energy storage-power expansion pack 200 may include a second battery management control board 214 configured to monitor battery state information of the second battery module 204. The second battery management control board 214 is in communication with the first battery management control board 126. Thus, the battery state information of the second battery module 204 can be transmitted to the first battery management control board 126. The first battery management control board can be configured to manage the second battery module 204 through the second battery management control board 214 based on the battery state information of the second battery module 204, such as closing, charging, and discharging.

Optionally, the second firefighting module 206 is disposed in a region adjacent to the second battery module 204 in the power-expansion pack case 202.

In some embodiments, the second firefighting module 206 is a passive self-triggering firefighting module.

Therefore, the energy storage-power expansion pack 200 is more suitable for the balcony photovoltaic energy storage products with a relatively low capacitance.

Specifically, the passive self-triggering firefighting module may refer to a firefighting module that does not have an independent power supply and can autonomously release a fire extinguishing agent in a thermal runaway state of the energy storage-power expansion pack 200 without a power supply. Accordingly, even if the energy storage-power expansion pack 200 is equipped with the second firefighting module 206, the second firefighting module 206 basically does not consume electrical energy of the energy storage-power expansion pack 200, ensuring long-term power storage and power supply capacities of the energy storage-power expansion pack 200. In this way, the energy storage-power expansion pack 200 is more suitable for the balcony photovoltaic energy storage products with the relatively low capacitance.

In some embodiments, the trigger mechanism 116 includes a passive trigger mechanism. The passive trigger mechanism includes any one of a temperature detector, a smoke detector, or an air pressure detector.

Therefore, it is possible to trigger the firefighting function without consuming the electrical energy of the energy storage-power expansion pack 200.

In one embodiment, the passive trigger mechanism may be self-triggered based on a physical/chemical mechanism. The self-triggering of the passive trigger mechanism based on the physical/chemical mechanism can require no power supply and does not consume the energy of the energy storage-power expansion pack 200, ensuring that more electrical energy is available for user consumption.

In one embodiment, the passive trigger mechanism is self-triggered based on a physical mechanism. The physical self-trigger firefighting mechanism is a pure mechanical emergency fire extinguishing technology that does not rely on power or control systems. It primarily realizes an automatic detection of a fire hazard and release of the fire extinguishing agent based on inherent physical properties of materials (e.g., a thermal-sensitive effect, a pressure change).

Specifically, the physical mechanism may include, but is not limited to, a thermally sensitive trigger mechanism and a pressure-linked trigger mechanism. The thermally sensitive trigger mechanism may mean that when a temperature of the firefighting detection region 120 reaches or is greater than the predetermined temperature, in response to the relatively higher temperature, the trigger mechanism 116 may generate a trigger signal, thereby causing the release mechanism 118 to release the fire extinguishing agent into the chamber where the second battery module 204 is located. Optionally, under the thermally sensitive trigger mechanism, the passive trigger mechanism may include a thermal sensitive wire 130, which may be disposed in the firefighting detection region 120. When a temperature of a firefighting detection reaches or is greater than a melting temperature of the thermal sensitive wire 130, the release mechanism 118 is configured to, in response to the trigger signal from the trigger mechanism 116, release the fire extinguishing agent into the chamber where the second battery module 204 is located.

The pressure-linked trigger mechanism may mean that when a pressure of the firefighting detection region 120 reaches or is greater than a predetermined pressure, in response to the relatively higher pressure, the trigger mechanism 116 may generate a trigger signal, thereby causing the release mechanism 118 to release the fire-extinguishing agent into the chamber where the second battery module 204 is located. Optionally, under the pressure-linked trigger mechanism, the passive trigger mechanism may include a mechanical pressure relief valve. The mechanical pressure relief valve is configured to eject high-pressure gas outward when the battery cell 114 is in the thermal runaway state. When the pressure is greater than or equal to the predetermined pressure, the mechanical pressure relief valve is automatically opened and be linked with the release mechanism 118, to release the fire extinguishing agent into the chamber where the second battery module 204 is located.

In one embodiment, the passive trigger mechanism is self-triggered based on a chemical mechanism. The chemical self-triggering firefighting mechanism is a technology that realizes an automatic detection of a fire hazard and release of the fire extinguishing agent based on inherent physical and chemical properties of materials (e.g., thermally sensitive degradation, gas-generating chemical reaction). Specifically, it involves activating a firefighting system through an autonomous reaction of chemical substances at high temperatures or specific conditions, without intervention of an external power or control system.

Specifically, the chemical self-triggering mechanism may include a thermosensitive polymer bursting mechanism and a drive by gas generated from chemical decomposition. Under the thermosensitive polymer bursting mechanism, the passive trigger mechanism may include a fire detection tube, in which a low-melting point copolymer is provided (e.g., ethylene vinyl acetate). The fire detection tube is located in the firefighting detection region 120. When the temperature of the firefighting detection region 120 reaches or is greater than the predetermined temperature (e.g., 72°C to 90°C), polymer molecular chains are fractured and softened, and a pressure of internal drive gas (e.g., nitrogen) exceeds a limit of a tube wall, causing directional bursting. At a moment of the bursting, the fire-extinguishing agent is driven to be accurately ejected to a heat source point through a crack.

Under the mechanism of a drive by gas generated from chemical decomposition, the passive trigger mechanism may include a gas generation agent. For the gas generation agent, a solid gas-generating agent (e.g., nitrocellulose) is added to the fire-extinguishing agent storage compartment. When heat generated in the thermal runaway state is conducted to the fire-extinguishing agent storage compartment, the gas-generating agent is quickly decomposed to release a large amount of gas (e.g., CO₂/N₂), to promote the fire-extinguishing agent to be ejected at a high speed.

In one embodiment, the passive trigger mechanism includes any one of a temperature detector, a smoke detector, or an air pressure detector.

Therefore, a passively triggered firefighting function can be realized through any of a temperature, smoke, and an air pressure.

In one embodiment, the passive trigger mechanism includes a temperature detector. The temperature detector may be disposed in the firefighting detection region 120 and is configured to detect a temperature of the firefighting detection region 120. When the temperature of the firefighting detection region 120 is greater than or equal to the predetermined temperature, in response to the high temperature, the passive trigger mechanism may generate a trigger signal, thereby causing the release mechanism 118 to release a fire extinguishing agent into the chamber where the second battery module 204 is located.

In one embodiment, the passive trigger mechanism includes a smoke detector. The smoke detector may be disposed in the firefighting detection region 120 and is configured to detect a smoke concentration of the firefighting detection region 120. When the smoke concentration of the firefighting detection region 120 is greater than or equal to a predetermined concentration, in response to the high-concentration smoke, the passive trigger mechanism may generate a trigger signal, thereby causing the release mechanism 118 to release a fire-extinguishing agent into the chamber where the second battery module 204 is located.

In one embodiment, the passive trigger mechanism includes an air pressure detector. The air detector may be disposed in the firefighting detection region 120 and is configured to detect an air pressure of the firefighting detection region 120. When the air pressure of the firefighting detection region 120 is greater than or equal to a predetermined air pressure, in response to the high air pressure, the passive trigger mechanism may generate a trigger signal, thereby causing the release mechanism 118 to release a fire extinguishing agent into the chamber where the second battery module 204 is located.

In some embodiments, the temperature detector is a flexible temperature detector. Referring to FIG. 6, the flexible temperature detector includes a thermal sensitive wire 130 disposed in the firefighting detection region 120. The thermal sensitive wire 130 is configured to, when a temperature of the firefighting detection region 120 is greater than or equal to a combustion temperature of the thermal sensitive wire 130, burn and trigger the second firefighting module 206 to release the fire extinguishing agent through the release mechanism 118.

Therefore, the arrangement of the temperature detector is facilitated.

Specifically, since the temperature detector is the flexible temperature detector, the temperature detector can be disposed at any part of the firefighting detection region 120 in the energy storage-power expansion pack 200 without changing internal space of the energy storage-power expansion pack 200 or without excessive modification to the internal space of the energy storage-power expansion pack 200. In this way, the temperature detector is avoided from occupying too much internal space of the energy storage-power expansion pack case 202. It is conducive to maintaining compactness of the energy storage-power expansion pack 200. The flexible temperature detector is more suitable for products with very limited space, such as a balcony energy storage system.

For example, the flexible temperature detector may be bent according to the internal space of the energy storage-power expansion pack 200 such that it is disposed in original internal space of the energy storage-power expansion pack 200. Thus, the flexible temperature detector can be disposed in the firefighting detection region 120 without providing additional space for the flexible temperature detector.

The flexible temperature detector includes the thermal sensitive wire 130. The thermal sensitive wire 130 is burned when its temperature is too high so as to perform a triggering action, which is simple and efficient and more suitable for the balcony energy storage products.

Specifically, when a temperature of the firefighting detection region 120 is greater than or equal to a combustion temperature of the thermal sensitive wire 130, the thermal sensitive wire 130 burns and triggers the second firefighting module 206 to release the fire extinguishing agent through the release mechanism 118.

In one embodiment, when the thermal sensitive wire 130 is burned, heat generated by its combustion may be transferred to the fire-extinguishing agent storage compartment to activate the fire extinguishing agent, and the release mechanism 118 can release the fire extinguishing agent into the chamber where the second battery module 204 is located.

In some embodiments, referring to FIG. 6, a fiberglass tube 132 is sleeved around the thermal sensitive wire 130.

Therefore, the fiberglass tube 132 can provide a protective function, such as mechanical stress buffering and chemical corrosion protection, thereby preventing the thermal sensitive wire 130 from fracturing and ensuring that the trigger signal can be transmitted promptly.

Specifically, the energy storage-power expansion pack 200 may need to be transported from factories, shops, etc., to end-user premises. During transportation and handling, mechanical stress is generated due to vibration of the energy storage-power expansion pack 200. With the fiberglass tube 132 sleeved around the thermal sensitive wire 130, the mechanism stress applied to the thermal sensitive wire 130 is buffered by the fiberglass tube 132, thereby preventing the fracture of the thermal sensitive wire 130 caused by the mechanical stress applied thereto to some extent, and preventing a failure of the passive firefighting function.

The energy storage-power expansion pack 200 may be placed outdoors for long-term use (such as on a balcony). Factors such as outdoor ambient temperature and humidity may cause the fracture of the thermal sensitive wire 130 due to chemical corrosion. With the fiberglass tube 132 sleeved around the thermal sensitive wire 130, the thermal sensitive wire 130 is separated from an exterior environment of the thermal sensitive wire 130 by the fiberglass tube 132, thereby preventing the fracture of the thermal sensitive wire 130 due to the chemical corrosion to some extent, and preventing the failure of the passive firefighting function.

In summary, it can be ensured that the thermal sensitive wire 130 can promptly trigger and transmit the trigger signal when the firefighting trigger condition in the firefighting detection region 120 is met.

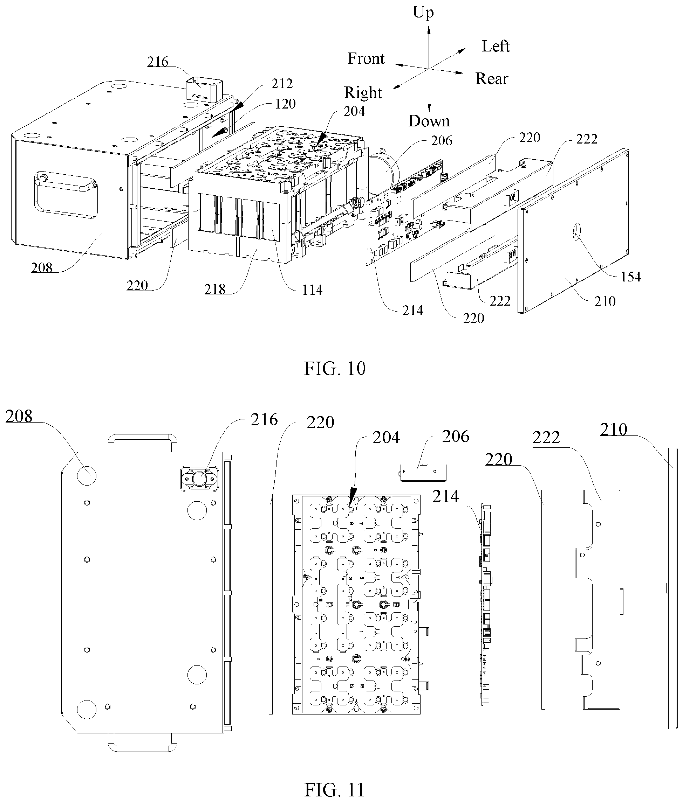

In some embodiments, referring to FIG. 9 and FIG. 10, the firefighting detection region 120 is located inside the second battery module 204 or in an electrode region of the second battery module 204.

Therefore, the trigger mechanism 116 can promptly respond to a thermal runaway state of the second battery module 204.

In one embodiment, the firefighting detection region 120 is located inside the second battery module 204. When the second battery module 204 is in a thermal runaway state inside the second battery module, heat is transferred to the trigger mechanism 116 from inside of the second battery module 204, In response to the heat, the trigger mechanism 116 generates the trigger signal promptly, thus causing the release mechanism 118 to release a fire extinguishing agent into the chamber where the second battery module 204 is located. In this way, the thermal runaway state is suppressed at its early state, preventing propagation of the thermal runaway state.

In one embodiment, the firefighting detection region 120 is located in an electrode region of the second battery module 204.

Therefore, a response speed of the trigger mechanism 116 is further improved.

Specifically, the second battery module 204 includes a plurality of battery cells 114. Each of the plurality of battery cells 114 includes a battery cell body 134, a positive electrode 136, and a negative electrode 138. In one embodiment, referring to FIG. 7, the positive electrode 136 and the negative electrode 138 are respectively located at two opposite ends of the battery cell body 134, and the electrode region may refer to a side where the positive electrode 136 of the battery cell 114 is located and a side where the negative electrode 138 of the battery cell 114 is located. In one embodiment, the positive electrode 136 and the negative electrode 138 are located at the same end of the battery cell body 134, and the electrode region may refer to the side where the positive electrode 136 and the negative electrode 138 of the battery cell 114 is located.

The battery cell 114 is charged or discharged during operation of the energy storage-power expansion pack 200. As a current flows through the positive electrode 136 and the negative electrode 138, much more heat is generated by the positive electrode 136 and the negative electrode 138. When the battery cell 114 is in a thermal runaway state, a temperature of each of the positive electrode 136 and the negative electrode 138 is typically high. The firefighting detection region 120 is the electrode region of the second battery module 204, and thus the heat generated in the thermal runaway state can be transferred to the trigger mechanism 116 promptly and rapidly. Accordingly, the trigger mechanism 116 generates a trigger signal, thus causing the release mechanism 118 to release the fire extinguishing agent into the chamber where the second battery module 204 is located promptly.

In addition, the battery cell 114 further includes an explosion-proof valve 140, which is typically disposed at a side surface of the battery cell body 134 where the electrodes are located. When the battery cell 114 is in the thermal runaway state, the explosion-proof valve 140 may eject high-temperature and high-pressure substances, and thus the trigger mechanism 116 can also respond quickly to generate the trigger signal.

In some embodiments, a thermal simulation test may be performed in the power-expansion pack case 202 of the energy storage-power expansion pack 200. A heat accumulation region in the power-expansion pack case 202 during the operation of the energy storage-power expansion pack 200 is determined by the thermal simulation test. The heat accumulation region is selected as the firefighting detection region 120. In some embodiments, the firefighting detection region 120 may also be other positions in the power-expansion pack case 202 of the energy storage-power expansion pack 200, which may be determined through experience and the like.

In some embodiments, referring to FIG. 9 to FIG. 11, the energy storage-power expansion pack 200 further includes a second battery management control board 214 electrically connected to the second battery module 204. The second battery management control board 214 is configured to monitor the battery state information of the second battery module 204. The trigger mechanism 116 includes an active trigger mechanism electrically connected to the second battery management control board 214. The second battery management control board 214 is configured to, in response to the battery state information monitored by the second battery management control board indicating a thermal runaway state, send a control signal to the active trigger mechanism. The active trigger mechanism is configured to, in response to the control signal, trigger the second firefighting module 206 to release the fire extinguishing agent through the release mechanism 118.

Therefore, the active trigger of the energy storage-power expansion pack 200 can be realized.

The energy storage-power expansion pack 200 further includes a busbar component and a sampling component. The busbar component is electrically connected to the plurality of battery cells 114, thereby enabling the electrical connection to be formed between the plurality of battery cells 114 in series, in parallel, or in a mixed form thereof. The sampling component may be connected to the busbar component and the second battery management control board 214, and the second battery management control board 214 is configured to monitor the battery state information of the second battery module 204 through the sampling component. The battery state information includes, but is not limited to, a current, a voltage, a temperature, etc.

In one embodiment, when the current is greater than or equal to a predetermined current, the battery state information may indicate the thermal runaway state. In one embodiment, when the temperature is greater than or equal to a predetermined temperature, the battery state information may indicate the thermal runaway state. The second battery management control board 214 is configured to send a control signal to the active trigger mechanism.

The active trigger mechanism is electrically connected to the second battery management control board 214. The active trigger mechanism can be configured to receive the control signal sent by the second battery management control board 214 and trigger, in response to the received control signal, the second firefighting module 206 to release the fire extinguishing agent into the chamber where the second battery module 204 is located through the release mechanism 118.

In some embodiments, the active trigger mechanism is an electric initiator, and the control signal is an electric activation signal. The electric activation signal includes a current signal or a voltage signal generated when a closed state is switched to an open state, or when an open state is switched to a closed state.

Therefore, in response to the electric activation signal, the active trigger mechanism may trigger the second firefighting module 206 to release the fire extinguishing agent through the release mechanism 118.

Specifically, the electric initiator may be disposed in a module body of the second firefighting module 206 and may be connected to a dry contact of the second battery management control board 214 by a wire harness 144.

In one embodiment, the second battery management control board 214 includes a detection circuit. Optionally, the detection circuit is in the closed state when the battery state information indicates a non-thermal runaway state. The detection circuit may be switched from the closed state to the open state when the battery state information indicates the thermal runaway state, thereby enabling the second battery management control board 214 to output the current signal or the voltage signal.

Optionally, the detection circuit is in the open state when the battery state information indicates a non-thermal runaway state. The detection circuit may be switched from the open state to the closed state when the battery state information indicates the thermal runaway state, thereby enabling the second battery management control board 214 to output a current signal or a voltage signal.

When the battery state information indicates the thermal runaway state, the second battery management control board 214 can transmit the electric activation signal to the electric initiator via the wire harness 144. The second firefighting module 206 is triggered by the electric initiator to release the fire extinguishing agent through the release mechanism 118 into the chamber where the second battery module 204 is located.

Optionally, referring to FIG. 5, a connection portion 145 is provided at the module body of the second firefighting module 206, and the electric initiator may be connected to the wire harness 144 by the connection portion 145.

In some embodiments, referring to FIG. 6, a fiberglass tube 132 is sleeved around the wire harness 144 connected to the electric initiator.

Therefore, the fiberglass tube 132 can provide a protective function, such as mechanical stress buffering and chemical corrosion protection, thereby preventing the wire harness 144 from fracturing and ensuring that the electric activation signal can be transmitted promptly.

Specifically, the energy storage-power expansion pack 200 may need to be transported from factories, shops, etc., to end-user premises. During transportation and handling, mechanical stress is generated due to vibration of the energy storage-power expansion pack 200. With the fiberglass tube 132 sleeved around the wire harness 144 connected to the electric initiator, the mechanism stress applied to the wire harness 144 is buffered by the fiberglass tube 132, thereby preventing the fracture of the wire harness 144 caused by the mechanical stress applied thereto to some extent, and accordingly preventing a failure of the active firefighting function.

The energy storage-power expansion pack 200 may be placed outdoors for long-term use (such as on a balcony). Factors such as outdoor ambient temperature and humidity may cause the fracture of the wire harness 144 due to chemical corrosion. With the fiberglass tube 132 sleeved around the wire harness 144, the wire harness 144 is separated from an exterior environment of the wire harness 144 by the fiberglass tube 132, thereby preventing the fracture of the wire harness 144 due to the chemical corrosion to some extent, and accordingly preventing the failure of the active firefighting function.

In summary, it can be ensured that the wire harness 144 can promptly transmit the electric activation signal to the electric initiator when the battery state information indicates the thermal runaway state.

In some embodiments, referring to FIG. 5, the module body of the second firefighting module 206 is of a flat shape.

Therefore, it is not necessary to provide additional space or to provide excessive additional space for the module body of the second firefighting module 206, facilitating maintaining the compactness of the energy storage-power expansion pack 200.

Specifically, the module body of the second firefighting module 206 may be a second module body 206a. The fire-extinguishing agent storage compartment is disposed in the module body of the second firefighting module 206. The release mechanism 118 may be disposed at a surface of the module body, and the trigger mechanism 116 is connected to the module body. The module body of the second firefighting module 206 accounts for a large proportion of a total volume of the second firefighting module 206. More space is required to place the module body when mounting the second firefighting module 206. The second module body 206a is of a flat shape, and the module body may be disposed in an original flat space in the power-expansion pack case 202 or in a space which is slightly enlarged based on the original flat space, facilitating maintaining the compactness of the energy storage-power expansion pack 200.

Optionally, the second battery module 204 includes a second battery support 218 and a plurality of battery cells 114. The second battery support 218 is configured to fix the plurality of battery cells 114 to form the second battery module 204. The module body of the second firefighting module 206 faces towards a side of the second battery support 218 where the battery cell 114 is exposed.

In some embodiments, referring to FIG. 9, the module body of the second firefighting module 206 is fixed to an inner wall surface of the second battery box housing 208.

Therefore, the module body of the second firefighting module 206 may be disposed close to the second battery module 204, thereby enabling the second firefighting module 206 to rapidly respond to the thermal runaway state of the second battery module 204.

Specifically, the second battery module 204 is disposed in the second battery box housing 208, the inner wall surface of the second battery box housing 208 faces towards the second battery module 204. The module body of the second firefighting module 206 is fixed to the inner wall surface of the second battery box housing 208. Thus, the module body of the second firefighting module 206 can be brought closer to the second battery module 204. When the firefighting trigger condition in the firefighting detection region 120 is met, the trigger mechanism 116 can generate the trigger signal promptly, and thus the fire extinguishing agent released by the release mechanism 118 can reach the second battery module 204 faster, suppressing the thermal runaway state faster.

The module body of the second firefighting module 206 may be fixed to the inner wall surface of the second battery box housing 208 by a connection including, but not limited to, screws, snaps, etc.

In some embodiments, a distance between the inner wall surface of the second battery box housing 208 selected for the module body of the second firefighting module 206 and the second battery module 204 is greater than a mounting distance of the module body of the second firefighting module 206.

Therefore, the fire extinguishing agent can be released more smoothly and efficiently into the chamber where the second battery module 204 is located.

Specifically, the release mechanism 118 may be disposed at a surface of the module body of the second firefighting module 206. In order to improve operating efficiency of the second firefighting module 206, the module body of the second firefighting module 206 has a requirement of the mounting distance. The mounting distance is set in such a way that the release mechanism 118 may release the fire extinguishing agent more efficiently and smoothly into the chamber where the second battery module 204 is located. Accordingly, with the distance between the inner wall selected for the module body of the second firefighting module 206 and the second battery module 204 being greater than the mounting distance of the module body of the second firefighting module 206, the fire extinguishing agent can be released more smoothly and efficiently into the chamber where the second battery module 204 is located. In one example, the requirement of the mounting distance specifies that there should be no obstruction within a range of 0.05 meters from the release mechanism 118 (such as a nozzle 146).

In some embodiments, referring to FIG. 5, the release mechanism 118 includes a nozzle 146 located at a shell of the second firefighting module 206, and the nozzle 146 is disposed close to the second battery module 204.

Therefore, fire extinguishing accuracy of the fire extinguishing agent can be improved.

In one embodiment, the module body of the second firefighting module 206 is of a flat cylindrical shape, and the nozzle 146 may be disposed in a circumferential side surface of the shell of the module body. The nozzle 146 has a central axis parallel to a length direction of the battery cell body 134 of the battery cell 114, enabling the nozzle 146 to disposed close to the second battery module 204.

In one embodiment, an angle may be formed between the central axis of the nozzle 146 and the length of the battery cell body 134 of the battery cell 114, which may be 90 degrees or an acute angle.

It can be understood that the shape of the module body of the second firefighting module 206 is not limited in the present disclosure.

In some embodiments, referring to FIG. 10, the cover plate 210 is provided with a breather valve 154.

This ensures that the energy storage-power expansion pack 200 does not cause an explosion when in the thermal runaway state.

Specifically, in the related art, the breather valve 154 is configured to balance an air pressure inside the power-expansion pack case 202 and an air pressure outside the power-expansion pack case 202 to prevent an explosion caused by a sudden increase in the internal pressure in the thermal runaway state of the battery cell 114. Specifically, when the air pressure inside the power-expansion pack case 202 is relatively higher, the higher pressure can be released to an exterior of the power-expansion pack case 202 through the breather valve 154, thereby balancing the air pressure inside the power-expansion pack case 202 and the air pressure outside the power-expansion pack case 202. In other embodiments, the second battery box housing 208 is provided with a breather valve 154.

In some embodiments, the fire extinguishing agent is an aerosol fire extinguishing agent.

Therefore, the fire extinguishing agent can be stored at room pressure, eliminating a need to lay a pipe network. The aerosol fire extinguishing agent is non-toxic and non-corrosive, does not destroy an atmospheric ozone layer, and is environmentally friendly.

Optionally, the aerosol fire extinguishing agent may be a thermal aerosol fire extinguishing agent. A fire extinguishing mechanism of thermal aerosols primarily manifests in two aspects: on the one hand, a cooling effect of endothermic decomposition; and on the other hand, chemical inhibitory effects of gas and solid phases that operate synergistically with each other. In addition, gas-phase components in a product of the aerosol fire extinguishing agent also provide a certain auxiliary effect. The specific fire extinguishing principles of the aerosol fire extinguishing agent can be referred to the relevant description of the aforementioned embodiments, which is not elaborated herein.

Optionally, each of the integrated energy storage unit 100 and the energy storage-power expansion pack 200 includes a foam 220. In the integrated energy storage unit 100, the foam 220 may be disposed between the inner wall surface of the first battery box housing 110 and the first battery module 104 as well as between the first battery module 104 and the partition 148. In the energy storage-power expansion pack 200, the foam 220 is disposed between an inner wall surface of the second battery box case 208 and the second battery module 204 and between the second battery module 204 and the module support 222, and thus an impact force applied to the battery module can be buffered. The module support 222 can fix the second battery module 204. After the module support 222 and the second battery box housing 208 are fixedly mounted, a force is applied towards the second battery module 204 to prevent the second battery module 204 from shaking. Optionally, the alternating-current load output terminal 160 is further covered with a protective cover 224.

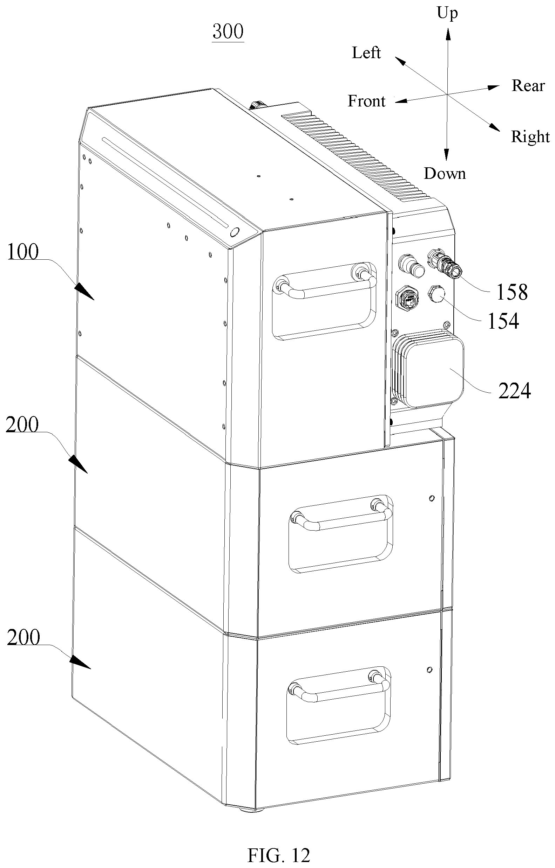

Referring to FIG. 12, an energy storage device 300 according to embodiments of the present disclosure includes the integrated energy storage unit 100 according to any one of the above embodiments and at least one energy storage-power expansion pack 200 according to any one of the above embodiments. The energy storage-power expansion pack 200 is configured to be electrically connected to the integrated energy storage unit 100 for capacity expansion of the integrated energy storage unit 100.

The above energy storage device 300, taking into account the characteristics of the consumer-oriented energy storage products, has elaborately designed a firefighting solution for the consumer-oriented energy storage products. It adopts a built-in firefighting design that is compact and economical, maintenance-free, efficient and reliable, without affecting appearance of the energy storage device 300.

In some embodiments, referring to FIG. 12, the integrated energy storage unit 100 and the energy storage-power expansion pack 200 are stacked in an up-down direction. The capacity expansion of the integrated energy storage unit is implemented by electrically connecting respective blind-mate terminals on adjacent contact surfaces where the integrated energy storage unit 100 and the energy storage-power expansion pack 200 are stacked, or the capacity expansion of the integrated energy storage unit is implemented by electrically connecting the integrated energy storage unit 100 and the energy storage-power expansion pack 200 via a cable.

Therefore, horizontal space occupied by the energy storage device 300 can be reduced, improving user experience.

Specifically, since the integrated energy storage unit 100 and the energy storage-power expansion pack 200 are stacked in the up-down direction, the energy storage device 300 can be placed using vertical space to reduce the lateral space occupied by the energy storage device 300. As a result, the user feels that the energy storage device 300 does not occupy too much residential space, improving the user experience and facilitating promotion of the energy storage device 300.

In an embodiment shown in FIG. 12, the energy storage device 300 includes an integrated energy storage unit 100 and two energy storage-power expansion packs 200. The integrated energy storage unit 100 is located at an uppermost layer of the energy storage device 300, and the two energy storage-power expansion packs 200 are stacked from top to bottom. The capacity expansion of the upper integrated energy storage unit is implemented by electrically connecting respective blind-mate terminals on adjacent contact surfaces where the middle energy storage-power expansion pack 200 and the upper integrated energy storage unit 100 are stacked, or the capacity expansion of the upper integrated energy storage unit is implemented by electrically connecting the middle energy storage-power expansion pack 200 and the upper integrated energy storage unit 100 via a cable. The lowermost energy storage-power expansion pack 200 and the middle energy storage-power expansion pack 200 are electrically connected through respective blind-mate terminals 216 on adjacent contact surfaces where the two energy storage-power expansion packs are stacked, or via a cable, and thus the lowermost energy storage-power expansion pack 200 and the upper integrated energy storage unit 100 can be electrically connected to enable capacity expansion of the upper integrated energy storage unit. It can be understood that in other embodiments, the lowermost energy storage-power expansion pack 200 can also be directly electrically connected to the upper integrated energy storage unit 100 to enable the capacity expansion, which is not limited in the present disclosure.

In an example, an integrated energy storage unit 100 has a battery capacity of 2KWH, and an energy storage-power expansion pack 200 has a battery capacity of 2KWH. The energy storage device 300 shown in FIG. 12 has a capacity of 6KWH after stacked expansion. The users can also purchase and select the number of energy storage-power expansion packs 200 according to their own household electricity needs.

In other embodiments, the position of the integrated energy storage unit 100 is not limited to being located at the uppermost part of the energy storage device 300, but may also be located at other height positions of the energy storage device 300, which is not limited in the present disclosure.

In one embodiment, referring to FIG. 8 and FIG. 9, each of the integrated energy storage unit 100 and the energy storage-power expansion pack 200 includes a blind-mate terminal 216. In the up-down direction, the integrated energy storage unit 100 and the energy storage-power expansion pack 200 stacked adjacent to the integrated energy storage unit 100 are electrically connected for capacity expansion through their respective blind-mate terminals 216, and two adjacent energy storage-power expansion packs 200 are electrically connected for capacity expansion through respective blind-mate terminals 216 of stacked adjacent contact surfaces. In one embodiment, in the up-down direction, the integrated energy storage unit 100 and the energy storage-power expansion pack 200 are electrically connected for capacity expansion via a cable.

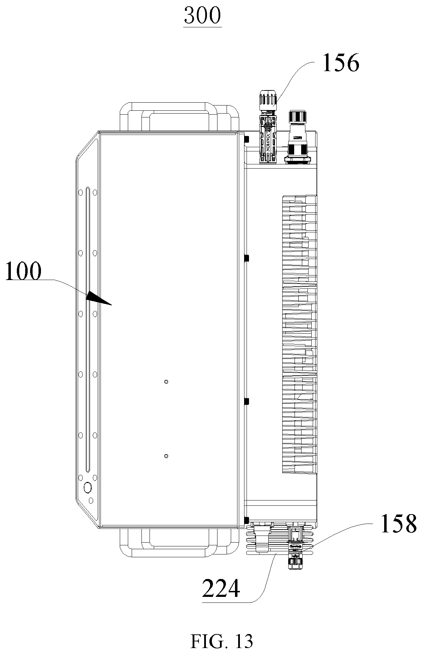

In some embodiments, referring to FIG. 12 and FIG. 13, subsequent to the stacking of the integrated energy storage unit 100 and the energy storage-power expansion pack 200, a top view projection of the integrated energy storage unit 100 coincides with a top view projection of the energy storage-power expansion pack 200, or the top-view projection of the integrated energy storage unit 100 overlaps with the top-view projection of the energy storage-power expansion pack 200 by more than 90%.

Therefore, stability of the energy storage device 300 after the stacking can be maintained.

Specifically, considering the stability of the energy storage device 300 after the stacking as well as visual integrity and aesthetic coherence of the stacked product, in the up-down direction, the top view projection of the integrated energy storage unit 100 coincides with the top view projection of the energy storage-power expansion pack 200, or the top-view projection of the integrated energy storage unit 100 overlaps with the top-view projection of the energy storage-power expansion pack 200 by more than 90%. That is, a width in a front-rear direction and a length in a left-right direction of the energy storage-power expansion pack 200 are required to be consistent or basically consistent with a width in a front-rear direction and a length in a left-right direction of the integrated energy storage unit 100.

In the case of the above configuration, the energy storage-power expansion pack 200 includes fewer components than the integrated energy storage unit 100, and thus a height of the energy storage-power expansion pack 200 can be reduced as much as possible to save structural costs. Unlike the first battery module 104 of the integrated energy storage unit 100 that adopts a side-mounted battery module (with a short side extending in the front-rear direction of the integrated energy storage unit 100), the second battery module 204 of the energy storage-power expansion pack 200 adopts a horizontally placed battery module (with a short side extending in the up-down direction of the energy storage-power expansion pack 200), which can minimize structural costs of the power-expansion pack case 202 of the energy storage-power expansion pack 200 as much as possible.

Optionally, in the up-down direction, the module body of the second firefighting module 206 is disposed corresponding to the blind-mate terminal 216 of the energy storage-power expansion pack 200 and is located on a left side of the second battery module 204.

In some embodiments, the energy storage device 300 includes any one of a balcony photovoltaic energy storage device, a portable energy storage device, or a household energy storage device.

Therefore, the energy storage device 300 has a wide range of applications, meeting needs of individual users for use in different scenarios.

In one embodiment, the energy storage device 300 includes a balcony photovoltaic energy storage device. The balcony photovoltaic energy storage device may be placed at a balcony of a house and may be connected to a photovoltaic panel, and thus can store electrical energy generated by the photovoltaic panel. The balcony photovoltaic energy storage device can also store electrical energy of a power grid. The portable energy storage device is a mobile energy storage device. The portable energy storage device can store electrical energy of each of the photovoltaic panel and the power grid. The user can carry the portable energy storage device to any place outdoors or indoors. The household energy storage device may be an energy storage device placed anywhere inside or outside the house and can store electrical energy of each of the photovoltaic panel and the power grid. The above energy storage device 300 of the different types can supply power to a load of the user. The load includes, but is not limited to, household appliances, lamps, kitchen appliances, mobile phones, tablet computers, computers, etc.

In summary, the integrated energy storage unit 100, the energy storage-power expansion pack 200, and the energy storage device 300 according to the embodiments of the present disclosure can achieve at least the following beneficial effects.
1. The thermal aerosol firefighting module having a relatively small volume is adopted.
2. An original product appearance and styling design are not affected by the built-in firefighting modules and the special location designs.
3. The passive self-triggering firefighting modules are adopted. The thermal sensitive wire is triggered by the excessive temperature, and thus no power consumption is required for the fire detection.
4. Overall, the firefighting modules feature low costs both in terms of their mounting structures and the modules themselves.
5. The passive triggering of the thermal sensitive wire and the active triggering of the dry contact are simple, efficient, and enable timely response.
6. The firefighting modules stored at the atmospheric pressure are adopted, which do not require the periodic inspection of the firefighting modules and are highly suitable for the balcony energy storage products (with a service life of over 10 years).

Although embodiments of the present disclosure have been illustrated and described, it is conceivable for those of ordinary skill in the art that various changes, combinations, modifications, replacements, and variations can be made to these embodiments without departing from the principles and spirit of the present disclosure. The scope of the present disclosure shall be defined by the claims as appended and their equivalents.

## Claims

1. An integrated energy storage unit, comprising:
an integrated unit case comprising a first battery box housing and a heat sink housing that are detachably connected to each other, wherein a first battery module is fixed in the first battery box housing, and wherein an inverter circuit board is fixed in the heat sink housing;
the first battery module comprising a plurality of battery cells configured to store and output electrical energy;
the inverter circuit board configured for a conversion between an alternating current and a direct current and heat dissipation to an exterior environment through the heat sink housing; and
a first firefighting module disposed in the integrated unit case, wherein the first firefighting module comprises a trigger mechanism, a fire-extinguishing agent storage compartment, and a release mechanism, wherein:
the trigger mechanism is disposed at a firefighting detection region in the integrated unit case and configured to generate a trigger signal when a firefighting trigger condition in the firefighting detection region is met;
the fire-extinguishing agent storage compartment is configured to store a fire extinguishing agent; and
the release mechanism is configured to, in response to the trigger signal from the trigger mechanism, release the fire extinguishing agent into a chamber where the first battery module is located.

2. The integrated energy storage unit according to claim 1, wherein the first firefighting module is a passive self-triggering firefighting module,
optionally, the trigger mechanism comprises a passive trigger mechanism, the passive trigger mechanism comprising any one of a temperature detector, a smoke detector, or an air pressure detector, wherein:
in a case that the passive trigger mechanism comprises a temperature detector, the temperature detector is a flexible temperature detector comprising a thermal sensitive wire disposed in the firefighting detection region, wherein the thermal sensitive wire is configured to, when a temperature in the firefighting detection region is greater or equal to a combustion temperature of the thermal sensitive wire, burn and in turn trigger the first firefighting module to release the fire extinguishing agent through the release mechanism, and optionally, wherein a fiberglass tube is sleeved around the thermal sensitive wire.

3. The integrated energy storage unit according to claim 1 or 2, wherein the firefighting detection region is located inside the first battery module or in an electrode region of the first battery module.

4. The integrated energy storage unit according to claim 1, wherein:
the integrated energy storage unit further comprises a first battery management control board electrically connected to the first battery module and configured to monitor battery state information of the first battery module; and
the trigger mechanism comprises an active trigger mechanism electrically connected to the first battery management control board, wherein:
the first battery management control board is configured to, in response to the battery state information monitored by the first battery management control board indicating a thermal runaway state, send a control signal to the active trigger mechanism; and
the active trigger mechanism is configured to, in response to the control signal, trigger the first firefighting module to release the fire extinguishing agent through the release mechanism,
optionally, wherein the active trigger mechanism is an electric initiator; and the control signal is an electric activation signal, wherein the electric activation signal comprises a current or voltage signal generated when a closed state is switched to an open state or when an open state is switched to a closed state; and
optionally, wherein a fiberglass tube is sleeved around a wiring harness connected to the electric initiator.

5. The integrated energy storage unit according to any one of claims 1 to 4, wherein the first firefighting module comprises a module body having the fire-extinguishing agent storage compartment, wherein the module body is of a flat shape, wherein the module body of the first firefighting module is fixed to an inner wall surface of the first battery box housing, and wherein a distance between the inner wall surface and the first battery module is greater than a mounting distance of the module body of the first firefighting module.

6. The integrated energy storage unit according to any one of claims 1 to 5, wherein the release mechanism comprises a nozzle located at a shell of the first firefighting module and disposed close to the first battery module.

7. The integrated energy storage unit according to any one of claims 1 to 6, wherein the integrated unit case further comprises a partition configured to divide the integrated unit case into a first chamber and a second chamber, the first chamber being enclosed by the first battery box housing and the partition, and the second chamber being enclosed by the heat sink housing and the partition, and
optionally, wherein the heat sink housing is provided with a breather valve.

8. The integrated energy storage unit according to any one of claims 1 to 7, wherein the heat sink housing is further provided with a photovoltaic connection terminal, a grid connection terminal, and an alternating-current load output terminal.

9. An energy storage-power expansion pack, configured to be electrically connected to an integrated energy storage unit to expand capacity of the integrated energy storage unit, the energy storage-power expansion pack comprising:
a power-expansion pack case comprising a second battery box housing and a cover plate that are detachably connected to each other, wherein a second battery module is fixed in the second battery box housing, and wherein the cover plate is configured to close a mounting opening of the second battery box housing;
the second battery module comprising a plurality of battery cells configured to store and output electrical energy; and
a second firefighting module disposed in the power-expansion pack case, wherein the second firefighting module comprises a trigger mechanism, a fire-extinguishing agent storage compartment, and a release mechanism, wherein:
the trigger mechanism is disposed at a firefighting detection region in the power-expansion pack case and configured to generate a trigger signal when a firefighting trigger condition in the firefighting detection region is met;
the fire-extinguishing agent storage compartment is configured to store a fire extinguishing agent; and
the release mechanism is configured to, in response to the trigger signal from the trigger mechanism, release the fire extinguishing agent into a chamber where the second battery module is located.

10. The energy storage-power expansion pack according to claim 9, wherein the second firefighting module is a passive self-triggering firefighting module,
optionally, wherein the trigger mechanism comprises a passive trigger mechanism, the passive trigger mechanism comprising any one of a temperature detector, a smoke detector, or an air pressure detector, wherein:
in a case that the passive trigger mechanism comprises a temperature detector, the temperature detector is a flexible temperature detector comprising a thermal sensitive wire disposed in the firefighting detection region, wherein the thermal sensitive wire is configured to, when a temperature in the firefighting detection region is greater or equal to a combustion temperature of the thermal sensitive wire, burn and in turn trigger the second firefighting module to release the fire extinguishing agent through the release mechanism, and optionally, wherein a fiberglass tube is sleeved around the thermal sensitive wire.

11. The energy storage-power expansion pack according to claim 9 or 10, wherein the firefighting detection region is located inside the second battery module or in an electrode region of the second battery module.

12. The energy storage-power expansion pack according to claim 9, wherein:
the energy storage-power expansion pack further comprises a second battery management control board electrically connected to the second battery module and configured to monitor battery state information of the second battery module; and
the trigger mechanism comprises an active trigger mechanism electrically connected to the second battery management control board, wherein:
the second battery management control board is configured to, in response to the battery state information monitored by the second battery management control board indicating a thermal runaway state, send a control signal to the active trigger mechanism; and
the active trigger mechanism is configured to, in response to the control signal, trigger the second firefighting module to release the fire extinguishing agent through the release mechanism,
optionally, wherein the active trigger mechanism is an electric initiator; the control signal is an electric activation signal, wherein the electric activation signal comprises a current or voltage signal generated when a closed state is switched to an open state or when an open state is switched to a closed state; and
optionally, wherein a fiberglass tube is sleeved around a wiring harness connected to the electric initiator.

13. The energy storage-power expansion pack according to any one of claims 9 to 12, wherein the second firefighting module comprises a module body of a flat shape, wherein the module body of the second firefighting module is fixed to an inner wall surface of the second battery box housing, and wherein a distance between the inner wall surface and the second battery module is greater than a mounting distance of the module body of the second firefighting module,
optionally, wherein the release mechanism comprises a nozzle located at a shell of the second firefighting module and disposed close to the second battery module, and
optionally, wherein the second battery box housing or the cover plate is provided with a breather valve.

14. An energy storage device, comprising:
the integrated energy storage unit according to any one of claims 1 to 8; and
at least one energy storage-power expansion pack according to any one of claims 9 to 13, wherein:
the at least one energy storage-power expansion pack is configured to be electrically connected to the integrated energy storage unit to enable capacity expansion of the integrated energy storage unit.

15. The energy storage device according to claim 14, wherein the integrated energy storage unit and the at least one energy storage-power expansion pack are stacked in an up-down direction, wherein a top-view projection of the integrated energy storage unit coincides with a top-view projection of the energy storage-power expansion pack, or wherein the top-view projection of the integrated energy storage unit overlaps with the top-view projection of the energy storage-power expansion pack by more than 90%, and
wherein the capacity expansion of the integrated energy storage unit is implemented by electrically connecting respective blind-mate terminals on adjacent contact surfaces where the integrated energy storage unit and the at least one energy storage-power expansion pack are stacked, or wherein the capacity expansion of the integrated energy storage unit is implemented by electrically connecting the integrated energy storage unit and the at least one energy storage-power expansion pack via a cable,
optionally, wherein the energy storage device comprises any one of a balcony photovoltaic energy storage device, a portable energy storage device, or a household energy storage device.
